# EUROPEAN PATENT SPECIFICATION

(11) **EP 2 634 702 B1**
(45) Date of publication and mention of the grant of the patent: **29.10.2014**
(21) Application number: 12194012.6
(22) Date of filing: 23.11.2012
(51) Int. Cl.: G06F 12/08

(54) **Processor, information processing apparatus, and arithmetic method**
Prozessor, Informationsverarbeitungsvorrichtung und Arithmetikverfahren
Processeur, appareil de traitement d'informations et procédé arithmétique

(30) Priority: 29.02.2012 JP 2012044881
(43) Date of publication of application: 04.09.2013
(73) Proprietor: FUJITSU LIMITED, Kawasaki-shi, Kanagawa 211-8588 (JP)
(72) Inventor: Ueki, Toshikazu, Kanagawa, 211-8588 (JP); Okada, Seishi, Kanagawa, 211-8588 (JP); Koinuma, Hideyuki, Kanagawa, 211-8588 (JP); Sugizaki, Go, Kanagawa, 211-8588 (JP)
(74) Representative: HOFFMANN EITLE

(56) References cited:
- US-A- 5 692 150
- US-A1- 2007 005 906
- US-B1- 6 810 489

## Description

### FIELD

The embodiments discussed herein are directed to an processor, an information processing apparatus, and an arithmetic method.

### BACKGROUND

US Patent No. US 6,810,489 Bl discloses a fault-tolerant computer system having an application memory organized as a an address in the memory. A FIFO buffer stores a plurality of such cache lines. The system includes at least one CPU for executing instructions stored in the application memory. A checkpoint controller defines a series of repeating checkpoint cycles. The application memory and FIFO buffer are operated under the control of a memory controller. The checkpoint controller also has access to a plurality of registers in the CPU that define the state of that CPU at a point in each checkpoint cycle that is controllable by the controller. When the memory controller receives a cache line from the CPU in response to a write command specifying an address A in the application memory at which the cache line is to be stored, a copy of the cache line as stored in the application memory at A is copied into the FIFO buffer upon receiving the first write command specifying A after the start of the current checkpoint cycle. The cache line received in the write command is then used to overwrite the contents of address A in the application memory. At a predetermined point in each checkpoint cycle, the checkpoint controller causes the CPU to write back to the memory all dirty cache lines; and to store its internal registers defining the state of the CPU in the state memory. The checkpoint controller empties the contents of the FIFO buffer at the end of each checkpoint cycle if no error has been detected by the end of the checkpoint phase of the cycle. If an error is detected, the contents of the FIFO buffer are read back into the application memory, and the contents of the state memory are read back into the CPU. The system is then restarted after completing any hardware configuration needed for the restart.

Conventional information processing systems in which multiple arithmetic units share a memory are known. Information processing systems that use a shared memory method in which each of the arithmetic units caches data stored in a memory are known examples of such conventional information processing systems.

In this type of information processing system, backup data is created in a shared memory such that it can be easily recovered if one of the arithmetic units fails. However, when updating backup data, an arithmetic unit having a cache function caches both data to be backed up and old backup data and then updates the cached backup data. Consequently, if a failure occurs in the arithmetic unit before the arithmetic unit writes the updated backup data back to the memory, the updated backup data may sometimes not be written back to the memory.

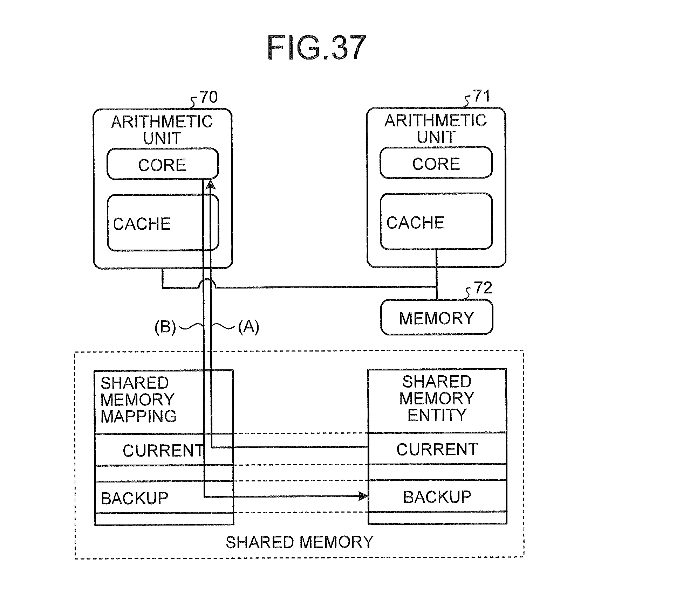

As a consequence, there is a known technology in which a program is modified such that a flush request for writing data stored in a cache memory back to a memory is issued and backup data cached by an arithmetic unit is written back to the memory. In the following, a cache flush process for writing data cached by an arithmetic unit back to a memory will be described with reference to FIGS. 37 to 39.

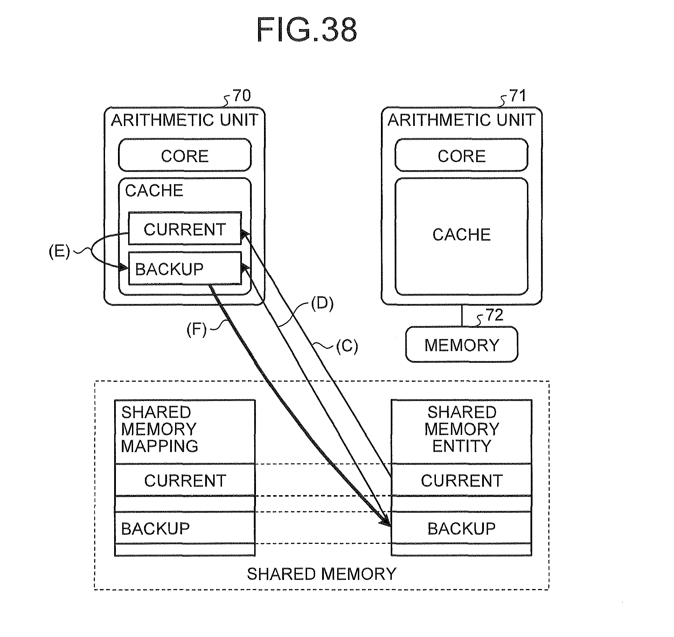

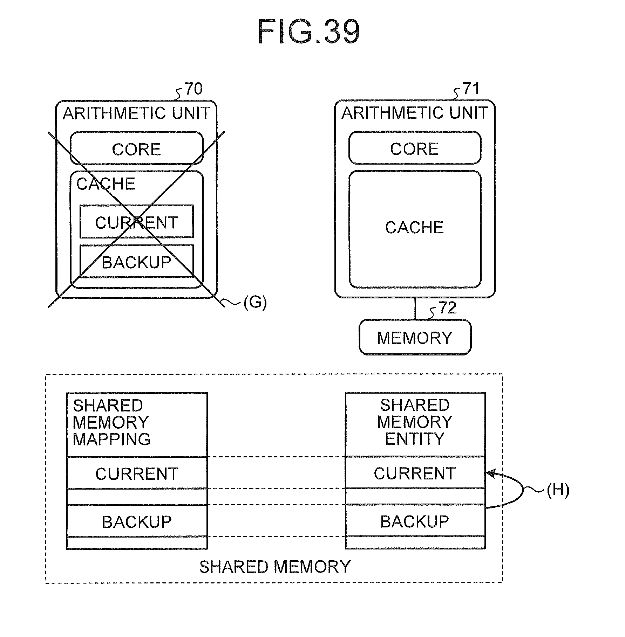

FIG. 37 is a schematic diagram illustrating a backup process. FIG. 38 is a schematic diagram illustrating a flush process. FIG. 39 is a schematic diagram illustrating a process when an arithmetic unit fails. In the example illustrated in FIG. 37, a process in which an arithmetic unit writes data back to a shared memory is illustrated viewed from the software side. FIGS. 38 and FIG. 39 each illustrate a process viewed from the hardware side.

In the example illustrated in FIG. 37, each of an arithmetic unit 70 and an arithmetic unit 71 includes a core and a cache memory and shares a memory 72 connected to the arithmetic unit 71. First, as illustrated in (A) of FIG. 37, when a program executed by the arithmetic unit 70 performs a backup of current data, i.e., data stored in the memory 72, the program issues a load request for the current data. Then, as illustrated in (B) of FIG. 37, in order to store the backup data of the read current data in the memory 72, the program executed by the arithmetic unit 70 issues both a store request and a flush request.

In contrast, as illustrated in (C) and (D) of FIG. 38, the arithmetic unit 70 that receives the issued load request from the program caches both the current data and the backup data stored in the shared memory. Furthermore, when the arithmetic unit 70 receives the issued store request from the program, the arithmetic unit 70 updates, in the cache memory, the backup data, as illustrated in (E) of FIG. 38. When the program issues a flush request, the arithmetic unit 70 writes the backup data stored in the cache memory back to the shared memory, as illustrated in (F) of FIG. 38.

Then, the latest backup data that is written back due to the flush request is present in the memory 72. Accordingly, as illustrated in (G) of FIG. 39, even if the arithmetic unit 70 fails, the information processing system performs recovery by using the latest backup data illustrated in (H) of FIG. 39.
Patent Document 1: Japanese Laid-open Patent Publication No. 2009-163450
Patent Document 2: Japanese Laid-open Patent Publication No. 2011-018196
Patent Document 3: Japanese Laid-open Patent Publication No. 11-259362
Patent Document 4: Japanese Laid-open Patent Publication No. 06-19797
Patent Document 5: Japanese Laid-open Patent Publication No. 04-175946
Patent Document 6: Japanese Laid-open Patent Publication No. 08-44626

However, with the technology for modifying a program such that a flush request is issued, there is a problem in that the program becomes complicated because it is modified such that a flush request is issued every time data to be written back to the memory is cached.

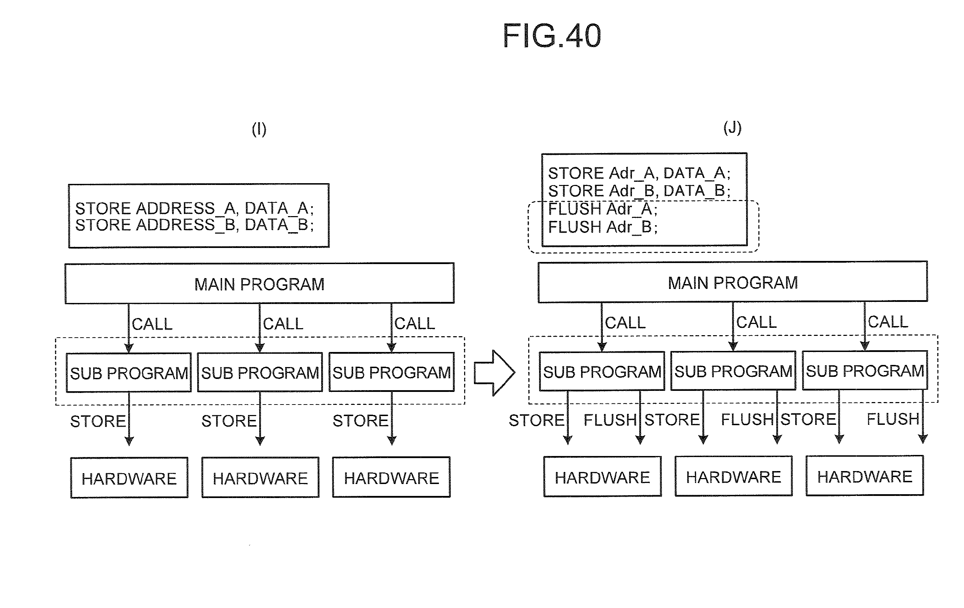

FIG. 40 is a schematic diagram illustrating a program to which a flush request is added. FIG. 40 illustrates a program executed by a system having a cluster configuration that has a shared memory. For example, as illustrated in (I) of FIG. 40, in the program executed by the system having the cluster configuration, a main program calls multiple sub programs to allow hardware to issue a store request to each of the sub programs.

Accordingly, as illustrated in (J) of FIG. 40, when a flush request of each of an address A and an address B is added to the program, the program is modified such that each of the sub programs issues a flush request. Furthermore, if the program is shared in the system having the cluster configuration, the program is modified such that it is determined whether a flush request is executed in accordance with the configuration of a cluster that executes the program. Consequently, the program becomes complicated.

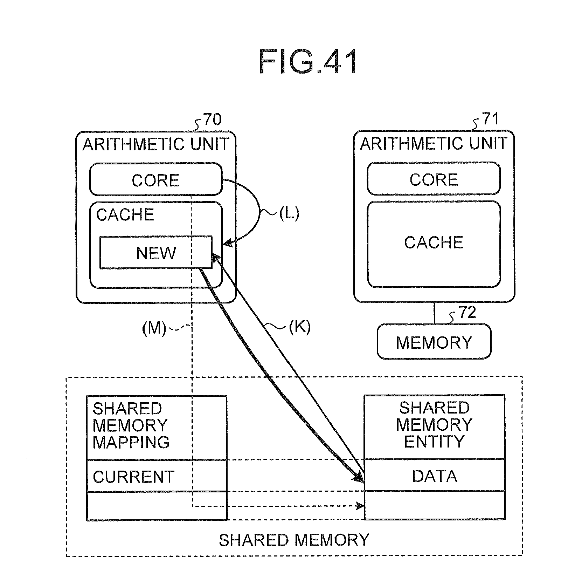

Furthermore, to avoid a complicated program, it may also be possible to use a write through method in which data is written back to a memory every time data in a cache is updated. FIG. 41 is a schematic diagram illustrating a write through method. For example, as illustrated in (K) of FIG. 41, the arithmetic unit 70 caches data from the shared memory and, as illustrated in (L) of FIG. 41, updates the cached data.

Then, as illustrated in (M) of FIG. 41, the arithmetic unit 70 writes the data in the cache back to the shared memory every time the cached data is updated. However, in the write through method, a process for writing data in the cache memory back to the shared memory takes place every time the arithmetic unit 70 updates the cached data, which is a bottleneck.

Furthermore, it is also conceivable to properly use a write back method and a write through method for writing back data when a cache memory is to be replaced. However, when the write back method and the write through method are properly used depending on a state, it is determined, in the program, whether the target of the store request is data to be written back to the memory, which makes it difficult to create a program. Furthermore, hardware that executes both the write back method and the write through method has complicated circuits.

Furthermore, it is also conceivable to perform a flush process on all cache lines; however, if the flush process is performed on all the cache lines, the time taken to perform the flush process is long. Furthermore, in the cache memory, there may be data not to be written back to the memory, such as data used for an arithmetic process; therefore, the processing capacity is degraded.

Accordingly, it is an object in one aspect of an embodiment of the invention to provide the amount of modification of a flush request issued by a program.

### SUMMARY

According to the present invention, there is provided a processor as set out in Claim 1.

The present invention also provides an information processing apparatus as set out in Claim 7.

The present invention further provides an arithmetic method executed by a processor as set out in Claim 8.

### BRIEF DESCRIPTION OF DRAWINGS

FIG. 1 is a schematic diagram illustrating an information processing system according to a first embodiment;
FIG. 2 is a schematic diagram illustrating the functional configuration of a node according to the first embodiment;
FIG. 3 is a schematic diagram illustrating an allocation of memories according to the first embodiment;
FIG. 4 is a schematic diagram illustrating a memory map with which the information processing system according to the first embodiment maps each memory;
FIG. 5 is a schematic diagram illustrating shared memory areas allocated by the information processing system according to the first embodiment;
FIG. 6 is a schematic diagram illustrating the relationship between hardware and software in the information processing system according to the first embodiment;
FIG. 7 is a schematic diagram illustrating the operation performed between an application and middleware according to the first embodiment;
FIG. 8 is a schematic diagram illustrating a process performed by a CPU according to the first embodiment;
FIG. 9 is a schematic diagram illustrating the effect of cache flush of a CPU according to the first embodiment;
FIG. 10 is a schematic diagram illustrating the effect of a CPU according to the first embodiment;
FIG. 11 is a schematic diagram illustrating the functional configuration of a node according to a second embodiment;
FIG. 12 is a schematic diagram illustrating a cache flush performed by using an outline sector flag;
FIG. 13 is a schematic diagram illustrating the functional configuration of a node according to a third embodiment;
FIG. 14 is a schematic diagram illustrating a multi-core-capable outline sector flag;
FIG. 15 is a schematic diagram illustrating the functional configuration of a node according to a fourth embodiment;
FIG. 16 is a schematic diagram illustrating an example of a process for limiting a specific way that is to be flushed;
FIG. 17 is a schematic diagram illustrating the functional configuration of a CPU according to a fifth embodiment;
FIG. 18 is a schematic diagram illustrating an L1 cache tag;
FIG. 19 is a schematic diagram illustrating an L1 cache;
FIG. 20 is a schematic diagram illustrating a process performed by a sector ID creating unit according to the fifth embodiment;
FIG. 21 is a schematic diagram illustrating an L2 cache tag, an L2 cache, and an L2 cache outline sector flag;
FIG. 22 is a schematic diagram illustrating a signal transmitted and received by an L2 cache access controller according to the fifth embodiment;
FIG. 23 is a flowchart illustrating the flow of a process for creating a sector ID that is stored in an L1 cache tag;
FIG. 24 is a flowchart illustrating the flow of a process for registering/updating a sector ID of an L1 cache;
FIG. 25 is a schematic diagram illustrating the transition of the sector ID registered in an L1 cache tag;
FIG. 26 is a flowchart illustrating the flow of a process for registering a sector ID of the L2 cache;
FIG. 27 is a flowchart illustrating the flow of a process for flushing only on a shared memory area;
FIG. 28 is a flowchart illustrating the flow of a process for registering a sector ID when a way to be flushed has an upper limit;
FIG. 29 is a flowchart illustrating the variation of the process performed when a way to be flushed has an upper limit;
FIG. 30 is a schematic diagram illustrating the shift of a sector ID of an L2 cache (No. 1);
FIG. 31 is a schematic diagram illustrating the shift of the sector ID of the L2 cache (No. 2);
FIG. 32 is a flowchart illustrating the flow of a process for setting an L2 cache outline sector flag;
FIG. 33 is a flowchart illustrating the flow of a process for performing a flush;
FIG. 34 is a sequence diagram illustrating an operation of software and hardware when a cache miss occurs at the time of the storing;
FIG. 35 is a sequence diagram illustrating an operation of software and hardware when a cache hit occurs at the time of the storing;
FIG. 36 is a sequence diagram illustrating an operation of software and hardware when a context switch occurs;
FIG. 37 is a schematic diagram illustrating a backup process;
FIG. 38 is a schematic diagram illustrating a flush process;
FIG. 39 is a schematic diagram illustrating a process when an arithmetic unit fails;
FIG. 40 is a schematic diagram illustrating a program to which a flush request is added; and
FIG. 41 is a schematic diagram illustrating a write through method.

### DESCRIPTION OF EMBODIMENTS

Preferred embodiments of the present invention will be explained with reference to accompanying drawings.

### [a] First Embodiment

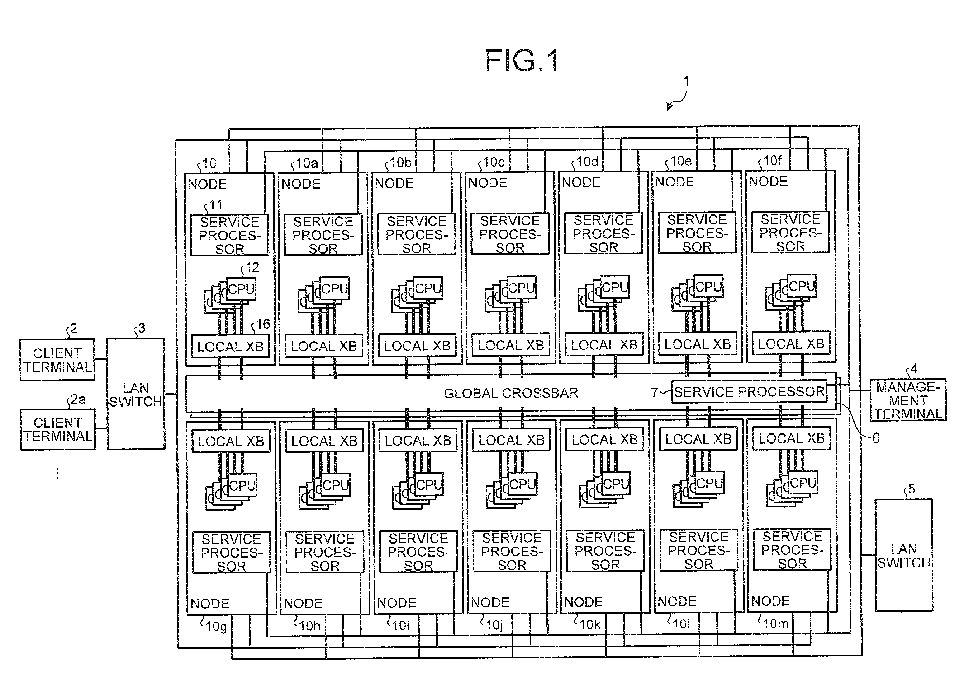

In a first embodiment described below, an example of an information processing system will be described with reference to FIG. 1. FIG. 1 is a schematic diagram illustrating an information processing system according to a first embodiment. In the example illustrated in FIG. 1, an information processing system 1 includes a client terminal 2, a client terminal 2a, a local area network (LAN) switch 3, a management terminal 4, a LAN switch 5, a double global crossbar 6, and nodes 10 to 10m. The global crossbar 6 includes a service processor 7.

In the first embodiment, a node is a unit in which a single and independent operating system (OS) runs and includes the bare minimum needed device for running the OS. As will be described later, the node includes one or more CPUs, memories, and hard disk drives (HDDs) or external storage device instead of the HDDs. The node may also be a single physical device or may also be physically constituted from multiple devices that are connected by using, for example, a cable.

The nodes 10 to 10m are connected, via a service LAN, to the LAN switch 3 and the client terminals 2 and 2a. Furthermore, the nodes 10 to 10m are connected to the LAN switch 5 via an internal LAN. Furthermore, the nodes 10 to 10m are connected to the management terminal 4 via a management LAN. Furthermore, the nodes 10 to 10m are connected to the double global crossbar 6 and are connected with each other via an interconnection.

Each of the client terminals 2 and 2a obtains a service from each of the nodes 10 to 10m via the service LAN. Although not illustrated in FIG. 1, the information processing system 1 may also include an arbitrary number of additional client terminals.

The node 10 includes a service processor 11, a CPU 12, and a local XB (crossbar) 16. Similarly to the node 10, other nodes 10a to 10m each includes a service processor, CPUs, and a local XB, respectively. In the following description, the nodes 10a to 10m have the same function as that performed by the node 10; therefore, a description thereof will be omitted.

The service processor 11 is connected to the management terminal 4 via the management LAN and executes management control, such as the management of a power supply in the node 10. The service processor 7 included in the global crossbar 6 operates as the master of the service processor 11 and performs overall management control. Examples of the management control executed by each of the service processors 7, and 11 include power supply management, resets, changes in operation modes, setting of the addition or the deletion of nodes, collection of error logs, and operation control of degeneracy.

Furthermore, the nodes 10 to 10m independently execute the operating system (OS). Although not illustrated in FIG. 1, the node 10 includes multiple CPUs other than the CPU 12. The CPUs are connected to the global crossbar 6 via the local XBs 16.

The CPUs in the node 10 output a memory access request, which is a request for memory access, to the local XB 16, thereby the CPUs transfer the memory access request to other nodes. Then, when the CPUs in the node 10 obtain a memory access request, the CPUs execute memory access in a similar manner as that executed when a CPU accesses the memory connected to the CPU. Specifically, the Non-Uniform Memory Access (NUMA) technology is used in the information processing system 1; therefore, each of the nodes 10 to 10m perform a process by sharing the corresponding memories.

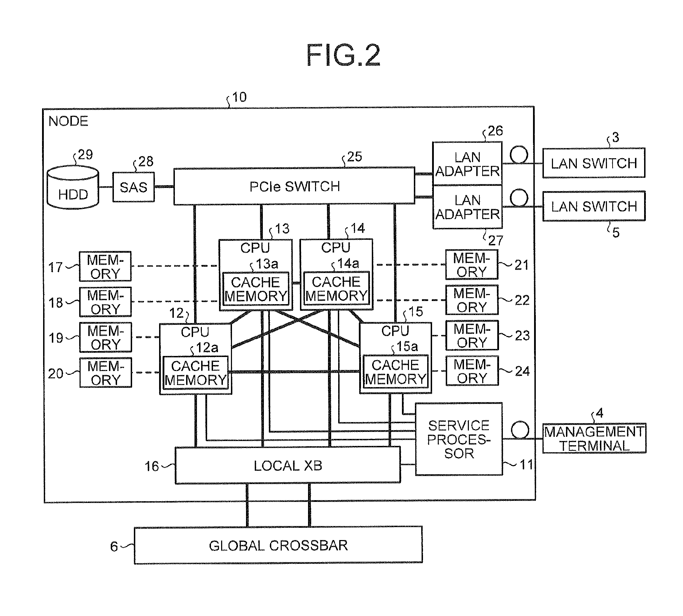

In the following, the functional configuration of the node 10 will be described with reference to FIG. 2. FIG. 2 is a schematic diagram illustrating the functional configuration of a node according to the first embodiment. In the example illustrated in FIG. 2, the node 10 includes the service processor 11, CPUs 12 to 15, the local XB 16, memories 17 to 24, and a Peripheral Component Interconnect Express (PCIe) switch 25. Furthermore, the node 10 includes a LAN adapter 26 to connect to the service LAN, a LAN adapter 27 to connect to the management LAN, a Serial Attached SCSI (SAS) 28, and a hard disk drive (HDD) 29.

The memory 17 and the memory 18 are connected to the CPU 13 and are storage devices that receive memory access performed by the CPU 13. The memory 19 and the memory 20 are connected to the CPU 12 and are storage devices that receive memory access performed by the CPU 12. The memory 21 and the memory 22 are connected to the CPU 14 and are storage devices that receive memory access performed by the CPU 14.

The memory 23 and the memory 24 are connected to the CPU 15 and are storage devices that receive memory access performed by the CPU 15. In the example illustrated in FIG. 2, the node 10 includes the HDD 29; however, the embodiment is not limited thereto. For example, the HDD 29 may also be arranged outside the node 10 by using a technology, such as Storage Area Network (SAN) technology.

The service processor 11 performs management control of the node 10. Specifically, the service processor 11 includes a processor and a Field-Programmable Gate Array (FPGA) that performs a process and receives, from the management terminal 4 via the management LAN, an instruction to perform management control. Then, the service processor 11 performs various management controls in accordance with the instruction received from the management terminal 4.

The PCIe switch 25 is a switch that controls access to, for example, an I/O device connected to each of the CPUs 12 to 15 via PCIe slots. The LAN adapter 26 is a LAN adapter that connects the service LAN to the node 10. Furthermore, the LAN adapter 27 is a LAN adapter that connects the management LAN to the node 10. The SAS 28 is an adapter for the LAN or the SAS mounted to the PCIe slot and relays the connection between the HDD 29 and each of the CPUs 12 to 15.

In the following, the CPUs 12 to 15 will be described. The CPUs 12 to 15 include cache memories 12a to 15a, respectively. Furthermore, the CPUs 12 to 15 are connected with each other and can transmit and receive a memory access request and a reply each other. In the following, the CPU 12 will be described. The CPU 12 is connected to other CPUs 13 to 15 with each other. The CPUs 13 to 15 have the same function as that performed by the CPU 12; therefore, a description thereof will be omitted.

The CPU 12 includes a cache memory that caches data stored by the memory 19 or the memory 20 and performs arithmetic processing by using the cached data. Furthermore, the CPU 12 has a function of a memory interface that performs memory access to each of the memory 19 and the memory 20. Furthermore, the CPU 12 has a PCIe interface function that controls an access by using the HDD 29, the internal LAN, or the management LAN via the PCIe switch 25.

A cache memory 12a included in the CPU 12 has multiple cache lines. If the CPU 12 updates data with in a time period specified by an application 35, the CPU 12 stores, on the cache line in which updated data is stored, a sector flag indicating that the data is updated. Then, if the time period specified by the application 35 ends, the CPU 12 executes a flush process for writing back to the memories 17 to 24 data stored in the cache line containing a sector flag from among the cache lines in the cache memory 12a.

Furthermore, the CPU 12 is connected, by an interconnection, to the CPUs included in the other nodes 10a to 10m via the local XB 16 and the global crossbar 6 and has a function of an interconnect router that transmits and receives memory access requests between each CPU. The CPU 12 having such a configuration performs the following process when, for example, a memory access request is issued to the memory 19 or the memory 20 by a process to be executed. Specifically, the CPU 12 accesses the memory 19 or the memory 20 and caches the data to be accessed.

Furthermore, when a memory access request is issued to a memory other than the memory 19 and the memory 20 by a process to be executed, the CPU 12 identifies the CPU connected to a memory that is the target of the memory access and transmits the memory access request to the identified CPU. Specifically, the CPU 12 has a node map in which a memory address to be accessed is associated with information uniquely indicating the CPU that accesses a storage area indicated by the memory address.

Then, if a process issues a memory access request, the CPU 12 refers to the node map and identifies a CPU that is associated with the memory address that is the target of the memory access. Thereafter, the CPU 12 creates a packet whose destination is the identified CPU, stores the memory access request in the created packet, and outputs the packet to the CPUs 12 to 15 connected with each other or to the local XB 16. If the packet is output to the local XB 16, the local XB 16 transmits, via the global crossbar 6, the packet to a CPU corresponding to the destination of the packet.

At this point, the CPU 12 executes the following process in addition to the above process. First, the CPU 12 previously sets a value called a memory token in the storage area, which is shared with the other nodes, between the storage areas in the memory 19 and the memory 20. Then, the CPU 12 notifies the CPU that issues a memory access request to the memory 19 or the memory 20 of a storage area to which access is permitted and notifies the CPU of a memory token associated with the notified storage area as an access token.

Furthermore, the CPU 12 previously obtains an access token from a node that transmits a memory access request and retains the obtained access token. Then, if the CPU 12 issues a memory access request, the CPU 12 stores the retained access token in a packet together with the memory access request and transmits the packet.

Furthermore, if the CPU 12 receives a memory access request from a CPU in the other node, the CPU 12 determines whether the access token received together with the memory access request matches the memory token that is associated with the storage area to be accessed. If the access token matches the memory token, the CPU 12 executes the memory access, whereas, if the access token does not match the memory token, the CPU 12 rejects the execution of the memory access.

If the CPU 12 performs memory access on the memory 19 or the memory 20, the CPU 12 performs a process for retaining the coherency of the data cached by the memory 19 or the memory 20. For example, the CPU 12 transmits a snoop to the CPU that has cached the data from the memory 19 or the memory 20 and performs a write back of the cached data.

The local XB 16 is a switch that transfers, to the specified destination, a packet that is exchanged between the CPUs 12 to 15 included in the node 10 and the CPUs included in the other nodes 10a to 10m. For example, the local XB 16 transmits the packet, which is issued by the CPU 12 and is to be transmitted to a CPU included in the node 10a, to the CPU included in the node 10a via the global crossbar 6.

The memory 17 to the memory 24 are memories that store therein data used by each of the OSs or the applications and are, for example, Dual In-Line Memory Modules (DIMMs). Furthermore, the memories 17 to 24 are mapped in the same memory address space.

Furthermore, the memories 17 to 24 each have an area that can be accessed by only the CPUs 12 to 15 in the same node, i.e., a local area that is an area dedicated to the node that includes the CPUs 12 to 15. Furthermore, the memories 17 to 24 each have an area that can be accessed by an arbitrary CPU included in the information processing system 1, i.e., have a shared memory area that can be used by all of the nodes. The shared memory area for the memories 17 to 24 is divided into multiple segments. Each segment is a protected area in which access control is performed by a memory token or is a non-protected area in which access control is not performed by a memory token.

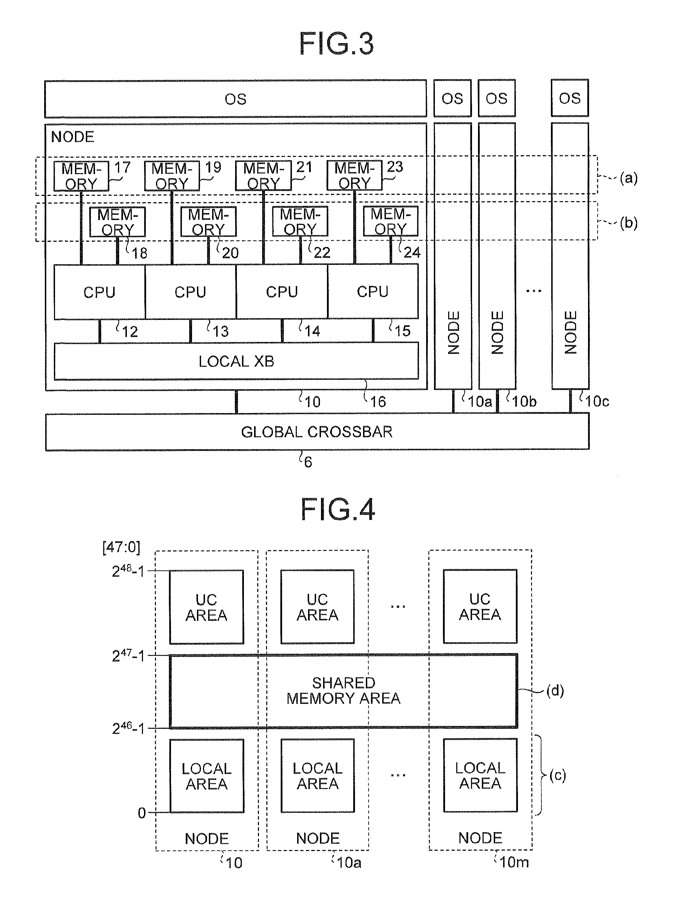

In the following, memory addresses that are mapped by the memories 17 to 24 will be described with reference to FIGS. 3 and 4. FIG. 3 is a schematic diagram illustrating an allocation of memories according to the first embodiment. For example, between the two memories included in each CPU, the information processing system 1 uses one memory as a memory only for a local area and uses the other memory as a memory only for a shared memory area. Specifically, as illustrated in (a) of FIG. 3, the memory 17, the memory 19, the memory 21, and the memory 23 are used as memories dedicated to the nodes and, as illustrated in (b) of FIG. 3, the memory 18, the memory 20, the memory 22, and the memory 24 are used as a shared memory.

FIG. 4 is a schematic diagram illustrating a memory map with which the information processing system according to the first embodiment maps each memory. FIG. 4 illustrates an example in which a total of the 128-terabyte memory address space is prepared, with 64 terabytes out of 128 terabytes being allocated to the local area and 64 terabytes out of 128 terabytes being allocated to the shared memory area.

For example, the information processing system 1 allocates memory addresses of "0" to "2⁴⁶-1" in the area used as the local area in the memories included in the nodes 10 to 10m. Furthermore, the information processing system 1 allocates memory addresses of "2⁴⁶" to "2⁴⁷-1" in the area used as the shared memory area in the memories included in the nodes 10 to 10m.

Specifically, in the example illustrated in FIGS. 3 and 4, the information processing system 1 maps the memory addresses in the area illustrated in (c) of FIG. 4 onto the memory 17, the memory 19, the memory 21, and the memory 23 illustrated in (a) of FIG. 3. Furthermore, the information processing system 1 maps the memory addresses in the region illustrate in (d) of FIG. 4 onto the memory 18, the memory 20, the memory 22, and the memory 24 illustrated in (b) of FIG. 3. The addresses of "2⁴⁷" to "2⁴⁸-1" illustrated in FIG. 4 are the address ranges used as an uncacheable (UC) area and are the address ranges for I/O space used by, for example, an I/O device, such as the HDD 29.

As described above, the information processing system 1 maps a single piece of memory address space onto memories included in the nodes 10 to 10m. Accordingly, an arbitrary CPU can directly access the shared memory area in an arbitrary node. The memory map illustrated in FIG. 4 is only an example; therefore, arbitrary allocation may also be performed.

Specifically, there is no need to allocate all of the memory addresses on the memory map to the memories. For example, a memory hole may also be presented. Furthermore, the memory map may also be set such that the local area used by the OS is present in each node included in the information processing system 1 and the shared memory area is present in one or more nodes.

If the information processing system 1 maps continuous memory addresses onto the memories (for example, the memory 17 and the memory 18) included in a single node, the information processing system 1 can delete the control resources. Furthermore, the information processing system 1 allocates memory addresses such that segment regions are at least aligned.

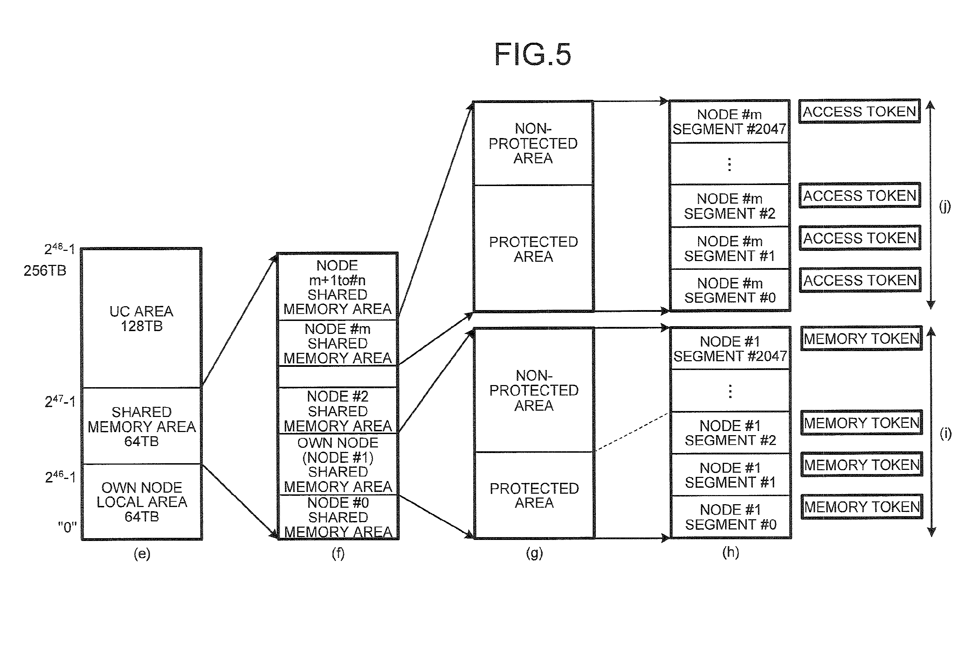

In the following, shared memory areas allocated to the memories in each node will be described with reference to FIG. 5. FIG. 5 is a schematic diagram illustrating shared memory areas allocated by the information processing system according to the first embodiment. In the example illustrated in FIG. 5, a description will be given of a case in which the information processing system 1 includes nodes #0 to #n and distributes shared memory areas to the nodes #0 to #n.

For example, as illustrated in (e) of FIG. 5, the information processing system 1 allocates a 64-terabyte local area and a 64-terabyte shared memory area to each of the nodes #0 to #n. Specifically, as illustrated in (f) of FIG. 5, the information processing system 1 equally distributes the 64-terabyte shared memory area to each of the nodes #0 to #n.

At this point, each of the nodes #0 to #n divides the distributed shared memory area into a protected area and a non-protected area. The protected area mentioned here is an area that protects access by determining whether an access token matches a memory token when a memory access request is received from another node. The non-protected area mentioned here is an area in which another node can freely perform memory access.

For example, as illustrated in (g) of FIG. 5, for the shared memory area allocated to a node #1, the node #1 can use a maximum of 4 terabytes as a protected area or a non-protected area. Furthermore, as illustrated in (h) of FIG. 5, the node #1 divides the shared memory area into segments corresponding to segments #0 to #2047 with 2 gigabytes. Then, as illustrated in (i) of FIG. 5, the node #1 sets a memory token for each segment.

Furthermore, in the example illustrated in FIG. 5, the node #1 uses the segments #0 to #2 as the protected area and sets a memory token in each segment. The memory token is, for example, a 13-bit value. In the example illustrated in FIG. 5, the node #1 sets the segments #3 to #2047 as the non-protected area and sets "all 0" as the memory token. Specifically, when each of the nodes #0 to #n accesses the corresponding non-protected area, the nodes can access the non-protected area by using the access token of "all 0".

Furthermore, the node #m also divides its own shared memory area into the segments #0 to #2047 and sets a memory token in each of the segments #0 to #2047. As illustrated in (j) of FIG. 5, the memory token that is set in each of the segments #0 to #2047 by the node #m is used by the node #1 as an access token. Accordingly, when the node #1 accesses the shared memory area in the node #m, the node #1 obtains the memory token that is set by the node #m and uses the obtained memory token as the access token, thereby the node #1 accesses the shared memory area in the node #m.

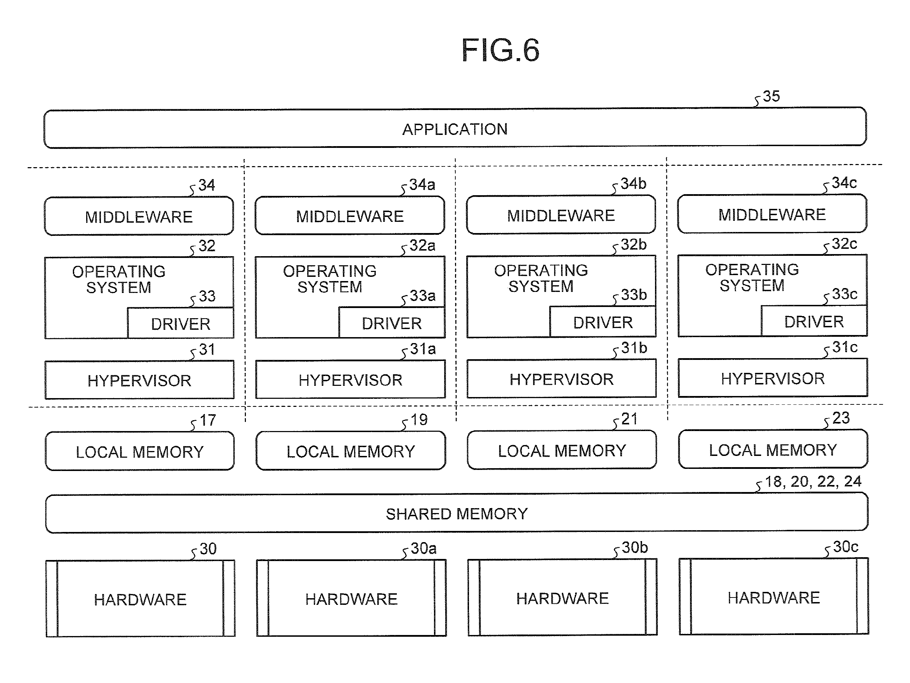

In the following, the relationship between the hardware in each of the CPUs 12 to 15 and the software executed by each of the CPUs 12 to 15 will be described with reference to FIG. 6. FIG. 6 is a schematic diagram illustrating the relationship between hardware and software in the information processing system according to the first embodiment. In the example illustrated in FIG. 6, the hardware included in the CPU 12 is defined as hardware 30 and the hardware included in the CPU 13 is defined as hardware 30a. In the example illustrated in FIG. 6, it is assumed that the hardware included in the CPU 14 is hardware 30b and that the hardware included in the CPU 15 is hardware 30c.

For example, the CPU 12 includes the hardware 30 and accesses the memory 17, which is a local memory dedicated to the CPU 12, and accesses the shared memories 18, 20, 22, and 24. Furthermore, the CPU 12 operates, on the hardware 30, a hypervisor 31, an operating system 32, a driver 33, and middleware 34. Furthermore, the CPU 12, executes, on the middleware 34, the application 35 that is cooperatively operated by each of the CPUs 12 to 15.

Furthermore, similarly to the CPU 12, the other CPUs 13 to 15 includes the hardware 30a to 30c, respectively, and operates hypervisors 31a to 31c, operating systems 32a to 32c, drivers 33a to 33c, and a middleware 34a to 34c, respectively.

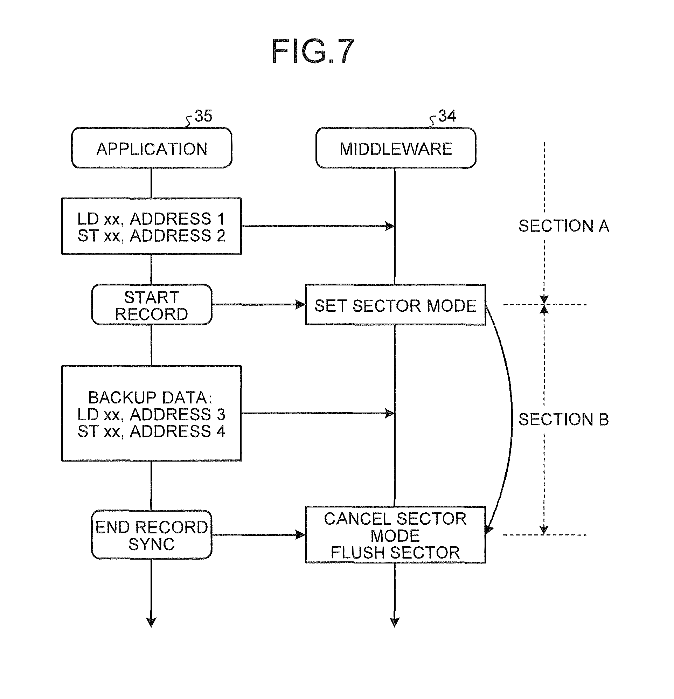

In the following, the operation performed between an application and middleware executed by the CPU 12 will be described with reference to FIG. 7. FIG. 7 is a schematic diagram illustrating the operation performed between an application and middleware according to the first embodiment. For example, in section A illustrated in FIG. 7, the application 35 issues a load request (LD: Lord) for data stored in an address 1 to be read and issues a set request (ST: Set) for the loaded data to be stored in an address 2. Then, although not illustrated in FIG. 7, the middleware 34 transmits the load request and the set request issued by the application 35 to the hardware 30 and allows the hardware 30 to execute a process.

Then, the application 35 notifies the middleware 34 of the start of the record and notifies the middleware 34 of a shift from section A to section B. Then, the middleware 34 sets a sector mode that indicates a shift to section B has been performed. Specifically, the middleware 34 performs the setting indicating that the section is within the time period specified by the application 35.

Thereafter, to back up data, the application 35 issues a load request for data stored in the address 3 and a store request for data stored in the address 4. In such a case, the middleware 34 allows the hardware 30 to execute the issued load request and the store request and sets a sector flag on the cache line of an address 4 that is the target for the store request.

Thereafter, the application 35 issues an SYNC indicating the end of the record to the middleware 34. Then, the middleware 34 recognizes that the section B ends and cancels the sector mode. Then, the middleware 34 issues a sector flush request to the hardware 30. The sector flush request mentioned here is a write back request for a cache line in which a sector flag is set. Specifically, the middleware 34 requests the hardware 30 to write only the data in the address 4 that is the target for the store request in the section B back to the memories 17 to 24. Then, the middleware 34 performs a normal process.

The section A and the section B can be switched in a static mode by using, for example, address space identifier (ASI) register write. The switching of the modes can be specified by the application 35. If a context switch occurs, the state is stored or restored.

For example, if a context switch to the application B occurs after an application A executed by the CPU 12 has switched the sector mode to the section B, the sector mode of the application A is maintained in the section A. If the application executed by the CPU 12 is changed from an application B to the application A, a context switch occurs and the section again moves to the section B.

If the sector flush is executed, the state of the cache line in which a sector flag is set becomes invalid. Accordingly, in the example illustrated in FIG. 7, if a load request or the like is issued to the address 4 after the middleware 34 issues a sector flush request, a cache miss occurs.

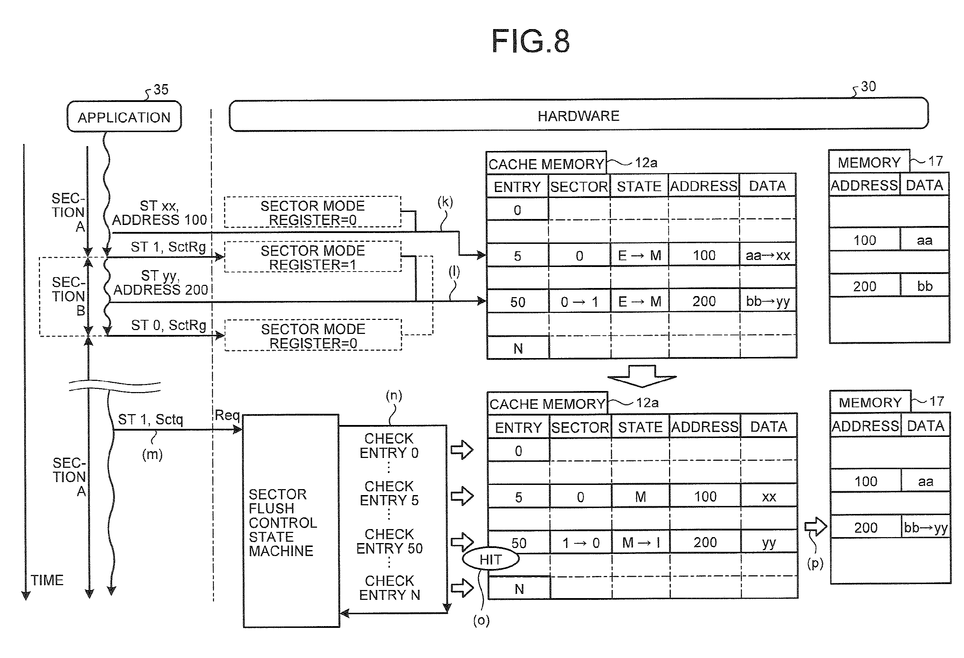

In the following, a process performed by the application 35 executed by the CPU 12 and the hardware 30 in the CPU 12 according to the first embodiment will be described with reference to FIG. 8. FIG. 8 is a schematic diagram illustrating a process performed by a CPU according to the first embodiment. FIG. 8 illustrates, as an example, that the cache memory 12a caches data stored in the memory 17.

In the example illustrated in FIG. 8, the hardware 30 includes sector mode registers in order to determine whether the current process is the process of the section A or the process of the section B. For example, a sector mode register is one of ASI registers included in the CPU 12. If the value is "0", this indicates that the current process is the process of the section A, whereas if the value is "1", this indicates that the current process is the process of the section B.

Furthermore, in the example illustrated in FIG. 8, the cache memory 12a contains multiple cache lines. Each of the cache lines stores therein an entry, a sector, a state, an address, and data. The entry is information for identifying a cache line. The sector is a sector flag indicating whether an update is performed within the time period specified by the application 35.

The state is information indicating the state of data, e.g., information indicating the state of a cache line based on the MESI protocol (Illinois protocol). Specifically, if "M: Modify" is stored in the state data, this indicates that data stored in the same cache line is exclusively cached and the cached data is updated to the latest state by a processor core.

If "E: Exclusive" is stored in the state data, this indicates that data stored in the same cache line is exclusively cached and the cache data is not updated by the processor core. If "S: Shared" is stored in the state data, this indicates that the other cache memories 15b and 15c cache the same shared data. If "I: Invalid" is stored in the state data, this indicates that data stored in the same cache line is invalid.

Furthermore, the address indicates a memory address in the memory 17 in which the cache source data is stored. The data is data to be cached. In the example illustrated in FIG. 8, the hardware 30 includes a sector flush control state machine that performs a write back to the memory 17 in accordance with the value of a sector of each of the cache lines. Specifically, the sector flush control state machine writes only the data of the cache line that is updated in section B back to the memory 17 in accordance with the request from the application 35.

In the following, the operation of the application 35 and the hardware 30 will be described. For example, as illustrated in (k) of FIG. 8, the application 35 issues a set request for the data "xx" to be stored in an address "100". Then, the hardware 30 recognizes that data "aa" is stored in the address "100" in the cache line of the entry "5" included in the cache memory 12a and then rewrites the data in the cache line of the entry "5" from "aa" to "xx".

Furthermore, because the hardware 30 has updated the data, the hardware 30 changes the state from "E" to "M". At this point, the value of the sector mode register is "0". Accordingly, for the data in the cache line of the entry "5", the hardware 30 leaves the value of the sector unchanged as "0".

Then, the application 35 issues a set request for "1" to be stored in a sector mode register (SctRg). Specifically, the application 35 requests the sector mode be shifted from the section A to the section B. Then, the hardware 30 stores "1" in the sector mode register.

Subsequently, as illustrated in (1) of FIG. 8, the application 35 issues a set request for data "yy" to be stored in the address "200". Then, the hardware 30 recognizes that data "bb" is stored in the address "200" in the cache line of the entry "50", rewrites data in the cache line of the entry "50" from "bb" to "yy", and changes the state from "E" to "M".

Furthermore, because the value of the sector mode register is "1", the hardware 30 stores the sector flag of "1" in the cache line of the entry "50". Specifically, the hardware 30 sets, in the section specified by the application 35, a sector flag indicating that the data in the cache line of the entry "50" has been updated.

Subsequently, the application 35 issues a set request for "0" to be stored in a sector mode register. Specifically, the application 35 requests a shift be made from the section B to the section A. Then, the hardware 30 stores "0" in the sector mode register. Thereafter, as illustrated in (m) of FIG. 8, by issuing a request for storing "1" in the sector flush control state machine (Sctq), the application 35 requests the execution of the cache flush. As illustrated in (n) of FIG. 8, the hardware 30 checks each of the cache lines and searches for the entry that contains "1" in the sector.

Then, as illustrated in (o) of FIG. 8, the hardware 30 determines that the sector of the entry "50" is "1". Consequently, as illustrated in (p) of FIG. 8, the hardware 30 writes data "yy" in the cache line of the entry "50" back to the memory 17. Specifically, the hardware 30 writes only the data updated in the section B back to the memory 17. Then, the hardware 30 changes the sector in the cache line of the entry "50" to "0" and also changes the state to "I".

As described above, from among multiple cache lines included in the cache memory 12a, the hardware 30 sets the sector flag to "1" in the cache line that contains data updated within the time period specified by the application 35, i.e., in the section B. Then, if the time period specified by the application 35 ends and if the hardware 30 receives a cache flush request from the application 35, the hardware 30 writes, back to the memory 17, only the data stored in the cache line containing the sector flag of "1".

Accordingly, the application 35 does not need to issue a flush request to a specified address every time a store request of data to be written back to the memory 17 is issued. Specifically, the application 35 only needs to specify the section in which a store request of data to be written back to the memory 17 is needed and only needs to issue a flush request. Accordingly, the CPU 12 that includes the hardware 30 can reduce the amount of modification of the program in the application 35.

Furthermore, from among the cache lines included in the cache memory 12a, the CPU 12 writes only the data stored in the cache line containing the sector flag of "1" back to the memory 17; therefore, the processing time for the cache flush can be reduced. Furthermore, the CPU 12 writes only the data stored in the cache line containing the sector flag of "1" back to the memory 17; therefore, the amount of unwanted cache flush is reduced and thus performance degradation due to the cache flush can be reduced to a minimum.

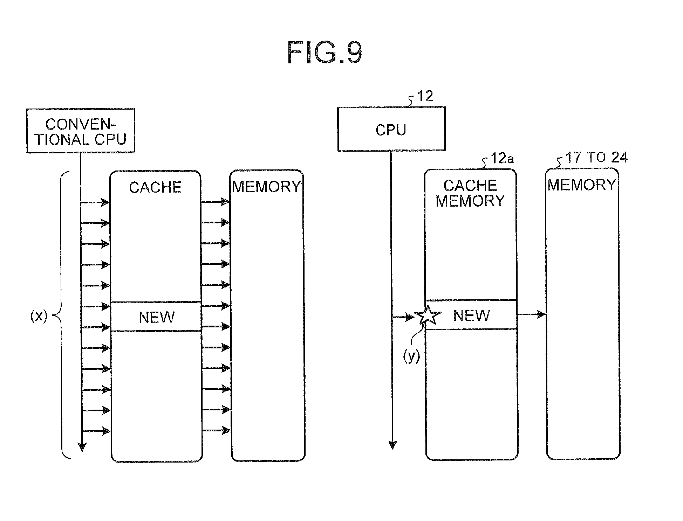

FIG. 9 is a schematic diagram illustrating the effect of a cache flush of a CPU according to the first embodiment. As illustrated in (x) of FIG. 9, with a conventional CPU, even if updated data is only a part of cached data, all the cached data is written back to a memory; therefore, the processing time of a cache flush increases and thus the performance of the entire system is degraded.

However, as illustrated in (y) of FIG. 9, the CPU 12 detects, by using a sector flag, only the data to be written back to the memories 17 to 24 from among the data stored in the cache memory 12a and writes only the detected data back to the memories 17 to 24. Consequently, the CPU 12 can reduce the processing time of the cache flush and prevent performance degradation of the information processing system 1.

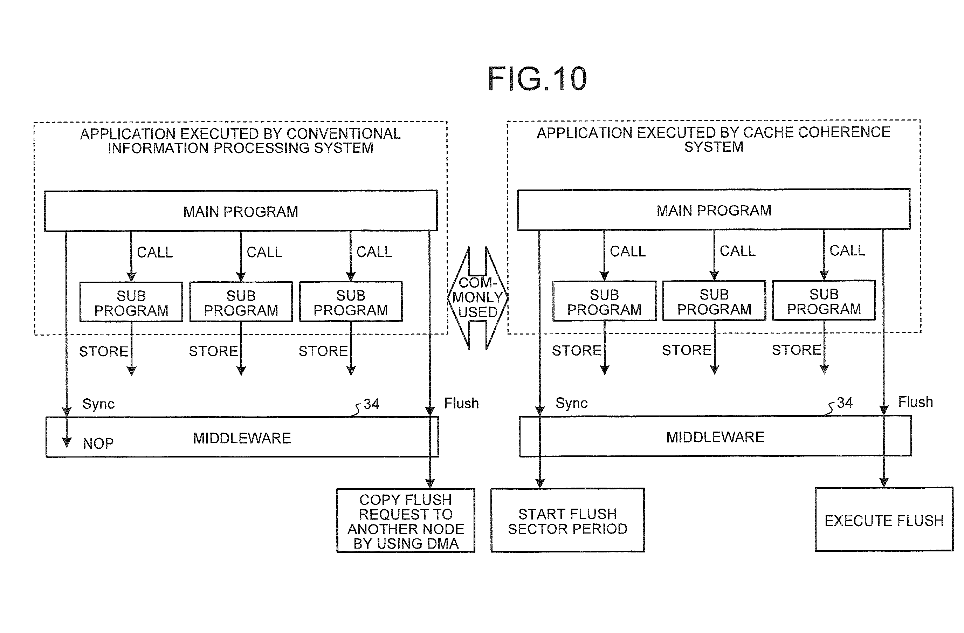

FIG. 10 is a schematic diagram illustrating the effect of a CPU according to the first embodiment. As illustrated in FIG. 10, with an application executed by a conventional information processing system, a main program Sync is issued to the middleware. The middleware is No Operation (NOP) middleware with respect to this Sync. Then, a main program calls multiple sub programs and each of the sub programs issues a store request to the corresponding middleware. Thereafter, the main program issues a flush request to the corresponding middleware. Then, the middleware copies the flush request to another node by using a direct memory access (DMA).

In contrast, if the information processing system 1 executes the application 35, which is similar to the above, the middleware 34 transmits the Sync to the CPU 12 when the application 35 issues the Sync. Consequently, the CPU 12 determines that the time period specified by the application, i.e., the time period of the flush sector, starts. Subsequently, a main program calls sub programs and each of the sub programs issues a store request. Then, the main program issues a flush request. Then, the CPU 12 executes, during the flush sector, a flush process on data that is updated due to a store request.

Accordingly, even when the CPU 12 uses an application commonly used by the conventional information processing system, the CPU 12 can write data to each of the memories 17 and 18 from the cache memory 12a. Consequently, the CPU 12 can reduce the amount the application needs to be modified, i.e., the addition of a flush request for writing back to a memory.

### Advantage of the first embodiment

As described above, the CPU 12 includes multiple cache lines and the cache memory 12a that temporarily retains data. Furthermore, the CPU 12 includes a sector flag, for each cache line, indicating whether data is updated within the time period specified by the application 35. Then, from among the cache lines included in the cache memory 12a, the CPU 12 writes, back to the memories 17 to 24, data stored in the cache line in which a sector flag indicates that data has been updated within the time period specified by the application 35.

Consequently, the CPU 12 can reduce the amount of modification of the program of the application 35. Furthermore, the CPU 12 can reduce the processing time of the write back of data and can prevent performance degradation of the information processing system 1.

### [b] Second Embodiment

In a second embodiment, in addition to the function performed by the CPU 12, a description will be given of a CPU that includes an outline sector flag indicating, for each set of cache lines, whether an update is performed within the time period specified by an application.

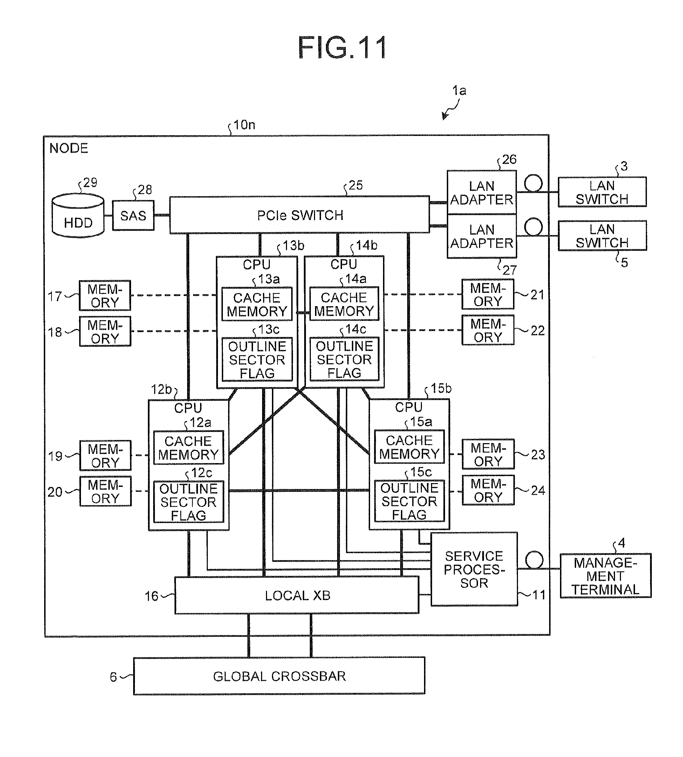

FIG. 11 is a schematic diagram illustrating the functional configuration of a node according to a second embodiment. FIG. 11 illustrates the functional configuration of a node 10n according to the second embodiment. The node 10n is a node included in an information processing system 1a having the same function as that in the first embodiment. Furthermore, the components in the node 10n illustrated in FIG. 11 having the same reference numerals as those in the first embodiment have the same function as that described in the first embodiment; therefore, a description thereof will be omitted. In the example illustrated in FIG. 11, the node 10n includes CPUs 12b to 15b.

The CPU 12b includes the cache memory 12a and an outline sector flag 12c. Similarly, the other CPUs 13b to 15b also include cache memories 13a to 15a and outline sector flags 13c to 15c, respectively. In the following description, it is assumed that the CPUs 13b to 15b have the same function as that performed by the CPU 12b; therefore, a description thereof will be omitted.

The CPU 12b has the same function as that performed by the CPU 12 according to the first embodiment and has the following function. Namely, the CPU 12b includes multiple outline sector flags 12c, for each set of multiple cache lines, whether an update is performed within the time period specified by an application. In addition, FIG. 11 illustrates one of the outline sector flags 12c.

For example, the CPU 12b divides multiple cache lines included in the cache memory 12a into multiple groups and associates the groups with the outline sector flags 12c. Then, the CPU 12b sets a flag, which indicates that updated data is present, in one of the outline sector flags 12c associated with the cache line that stores therein the data updated within the time period specified by the application. For example, if the CPU 12b updates data within the time period specified by the application, the CPU 12b changes the sector flag in the cache line containing the updated data to "1". Furthermore, the CPU 12b sets the outline sector flag 12c associated with the cache line in which the updated data is stored to "1".

Then, if the time period specified by the application ends and if a flush request is issued from the application, the CPU 12b checks cache lines associated with the outline sector flag 12c whose value is "1". Then, from among the checked cache lines, the CPU 12b identifies the cache line containing the sector flag of "1" and writes the data stored in the identified cache line back to the memories 17 to 24.

As described above, the CPU 12b includes the outline sector flag 12c, for each set of multiple cache lines, that indicate whether data is updated within the time period specified by an application. If a flush request is issued, the CPU 12b checks the cache lines associated with the outline sector flag 12c indicating that the data has been updated. Thereafter, the CPU 12 writes only the data stored in the cache line, in which the sector flag of "1" is set, back to the memories 17 to 24.

Accordingly, when a flush request is issued, the CPU 12b can recognize a cache line that stores therein data updated within the time period specified by the application without checking all of the cache lines included in the cache memory 12a. Consequently, the CPU 12b can reduce the processing time of the flush request and can improve the performance of the entire information processing system.

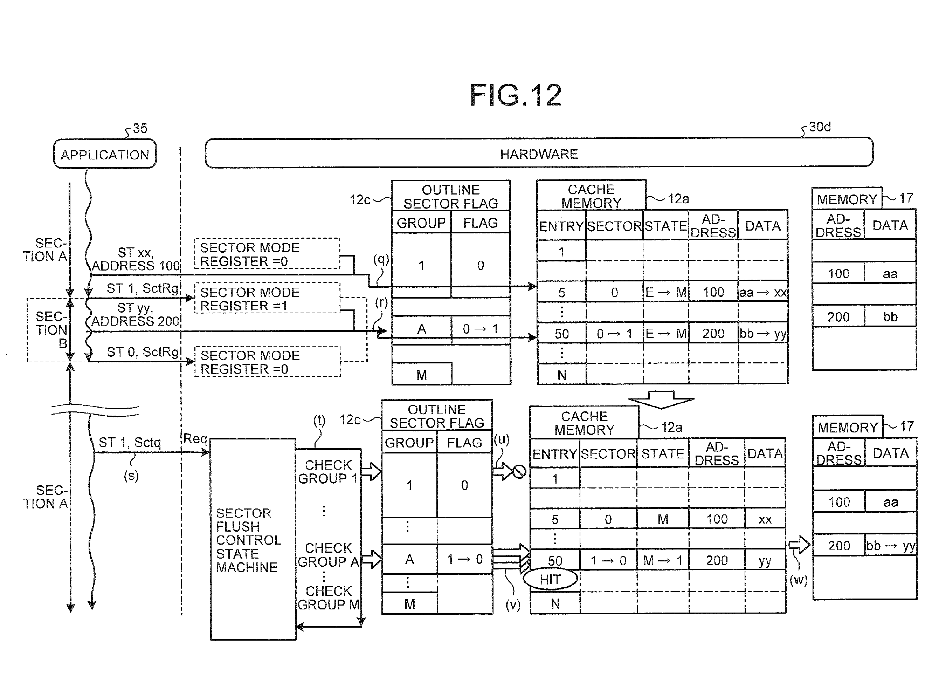

In the following, the application 35 executed by the CPU 12 and a process performed by the CPU 12b according to the second embodiment will be described with reference to FIG. 12. FIG. 12 is a schematic diagram illustrating a cache flush performed by using an outline sector flag. In the example illustrated in FIG. 12, it is assumed that the cache lines included in the cache memory 12a are divided into multiple groups. Furthermore, FIG. 12 illustrates, as an example, a process executed by hardware 30d included in the CPU 12b.

The outline sector flag 12c includes multiple entries in each of which a number for identifying a group is associated with a flag. A group is a number for identifying each group of the cache lines and, for example, numbers from "1" to "M" are assigned to the groups, respectively. In the example illustrated in FIG. 12, the cache lines of the entry "5" are allocated in a group "1" and the cache lines of the entry "50" are allocated in a group "A".

Furthermore, the flag mentioned here is a flag indicating whether data stored in a cache line allocated to the associated group number has been updated within the time period specified by the application 35. For example, if the flag in the group "1" is "1", the outline sector flag 12c indicates that data stored in the cache lines in the group "1" has been updated within the time period specified by the application 35. Furthermore, if the flag in the group "1" is "0", the outline sector flag 12c indicates that data stored in the cache lines in the group "1" has not been updated within the time period specified by the application 35.

In the following, a process executed by the CPU 12b will be described with reference to FIG. 12. As illustrated in (q) of FIG. 12, first, the application 35 issues a set request for the data "xx" to be stored in the address "100". Then, the hardware 30d rewrites the data in the cache line of the entry "5" from "aa" to "xx" and changes the state from "E" to "M". Furthermore, because the value of the sector mode register is "0", the hardware 30b leaves the value of the sector for the data in the cache line of the entry "5" unchanged as "0". Furthermore, because the value of the sector mode register is "0", the hardware 30b leaves the flag in the group "1" in the outline sector flag 12c unchanged as "0".

Then, the application 35 issues a set request for "1" to be stored in the sector mode register and requests the sector mode be shifted from the section A to the section B. Then, the hardware 30 stores "1" in the sector mode register. Subsequently, as illustrated in (r) of FIG. 12, the application 35 issues a set request for the data "yy" to be stored in the address "200". Then, the hardware 30d rewrites the data in the cache line of the entry "50" from "bb" to "yy" and changes the state from "E" to "M".

Furthermore, because the value of the sector mode register is "1", the hardware 30b stores the sector flag of "1" in the cache line of the entry "50". Specifically, the hardware 30 sets a sector flag indicating that the data in the cache line of the entry "50" has been updated within the time period specified by the application 35. Furthermore, in the outline sector flag 12c, the hardware 30b changes the flag in the group "A", to which the cache line of the entry "50" is allocated, to "1".

Subsequently, the application 35 issues a set request for "0" to be stored in the sector mode register and requests the sector mode to be shifted from the section A to the section B. Then, the hardware 30b stores "0" in the sector mode register. Thereafter, as illustrated in (s) of FIG. 12, by issuing a request for "1" to be stored in the sector flush control state machine, the application 35 requests to execute a cache flush.

Then, as illustrated in (t) of FIG. 12, the hardware 30d checks flags, each of which is associated with a group in the outline sector flag 12c, and searches for an entry storing therein the flag of "1". Then, as illustrated in (u) of FIG. 12, for the cache line in the group "1" containing the flag of "0", the hardware 30d does not perform the checking and checks, as illustrated in (v) of FIG. 12, only the cache lines in the group "A" storing therein the flag of "1". Thereafter, as illustrated in (w) of FIG. 12, the hardware 30d writes only the data stored in the entry "50", in which "1" is stored in the sector, back to the memory 17. Accordingly, the CPU 12b can write the data updated within the time period specified by the application 35 back to the memory 17 without checking all of the cache lines included in the cache memory 12a.

### Advantage of the second embodiment

As described above, the CPU 12b includes, for each set of multiple cache lines, an outline sector flag indicating whether data has been updated within the time period specified by the application 35. Then, if a flush request is issued, the CPU 12b checks cache lines associated with the outline sector flag indicating that data has been updated.

Thereafter, from among the checked cache lines, the CPU 12b writes the data in the cache line containing the sector flag indicating that the data has been updated within the time period specified by the application 35 back to the memories 17 to 24. Accordingly, the CPU 12b can write the data updated within the time period specified by the application 35 back to the memories 17 to 24 without checking all of the cache lines included in the cache memory 12a.

### [c] Third Embodiment

In a third embodiment, in addition to the functions performed by the CPU 12 and the CPU 12b, a description will be given of a multi-core CPU that includes, for each core, an outline sector flag indicating, for each set of cache lines, whether an update has been performed within the time period specified by the application 35.

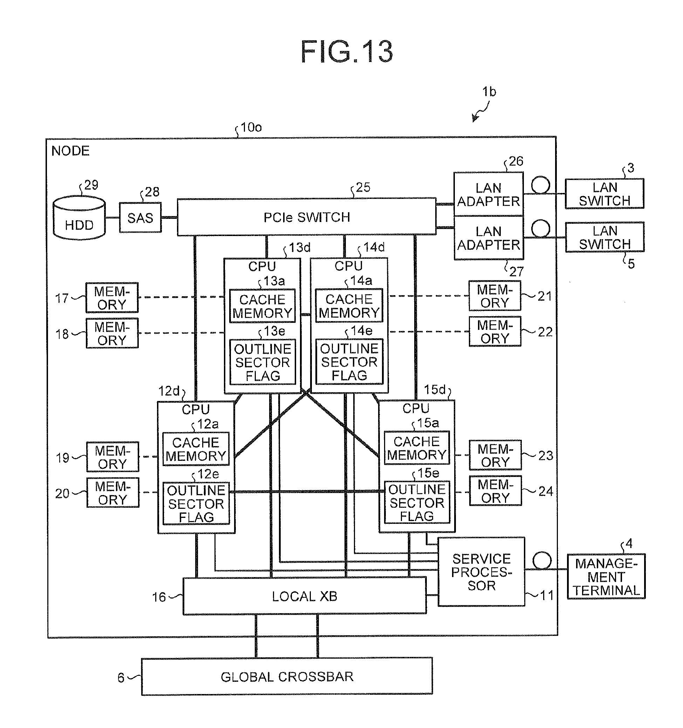

FIG. 13 is a schematic diagram illustrating the functional configuration of a node according to a third embodiment. FIG. 13 illustrates the functional configuration of a node 10o according to the third embodiment. The node 10o is a node included in an information processing system 1b having the same function as that in the first embodiment. Furthermore, the components in the node 10o illustrated in FIG. 12 having the same reference numerals as those in the first and the second embodiments have the same functions as those described in the first and the second embodiments; therefore, a description thereof will be omitted. In the example illustrated in FIG. 13, the node 10o includes CPUs 12d to 15d.

The CPU 12d includes the cache memory 12a and an outline sector flag 12e. Similarly, the other CPUs 13d to 15d include the cache memories 13a to 15a and outline sector flags 13e to 15e, respectively. In the following description, it is assumed that the CPUs 13d to 15d have the same function as that performed by the CPU 12d; therefore, a description thereof will be omitted.

The CPU 12d has the same function as that performed by the CPU 12 according to the first embodiment and the CPU 12b according to the second embodiment. Specifically, the CPU 12d includes multiple cores that execute an arithmetic process and executes an arithmetic process by using each core. For example, the CPU 12d includes four cores, i.e., cores A to D.

Furthermore, the CPU 12d includes, for each core, multiple flags indicating, for multiple cache lines, whether an update has been performed within the time period specified by the application 35. If the application 35 executed by a core requests a cache flush, the CPU 12d writes the data that has been updated within the time period specified by the application 35 back to the memories 17 to 24.

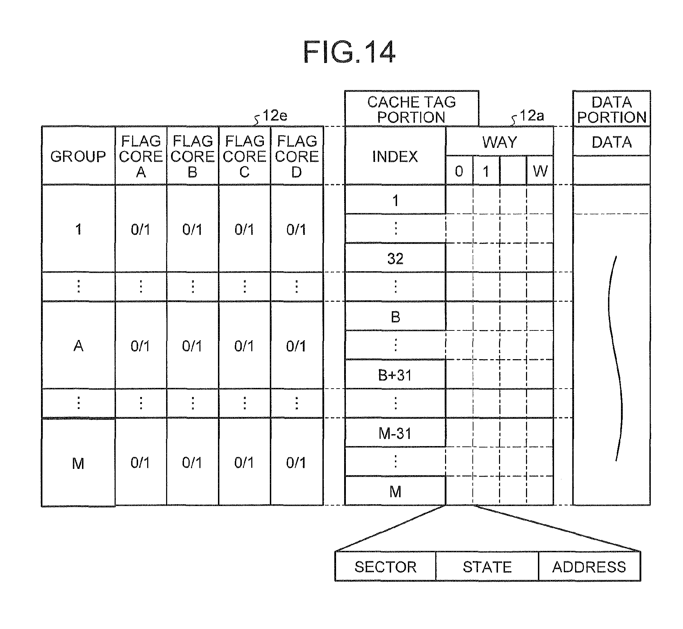

Specifically, the CPU 12d includes the outline sector flag 12e. The outline sector flag 12e is the multi-core-capable outline sector flag 12c and includes, for each core, a flag indicating, for each cache line, whether an update is performed within the time period specified by the application 35. In the following, an example of the outline sector flag 12e will be described with reference to FIG. 14.

FIG. 14 is a schematic diagram illustrating a multi-core-capable outline sector flag. FIG. 14 illustrates the outline sector flag 12e and the cache memory 12a. In the example illustrated in FIG. 14, the cache memory 12a includes multiple ways "0" to "W" in a single cache line. Furthermore, in the example illustrated in FIG. 14, the CPU 12d includes four cores A to D.

Furthermore, in the example illustrated in FIG. 14, the cache memory 12a includes a cache tag portion and a data portion. A sector, a state, and an address are stored in each of the ways "0" to "W" in the cache tag portion. Furthermore, the cache lines included in the cache memory 12a are divided into multiple groups. For example, indexes "1" to "32" are allocated in group "1", indexes "B" to "B+31" are allocated in group "A", and indexes "M-31" to "M" are allocated in group "M".

The outline sector flag 12e includes, for each core, a flag indicating whether data updated within the time period specified by the application 35 executed by each core is stored in a cache line in each group. Specifically, the outline sector flag 12e includes a flag indicating whether data, which is updated in accordance with the request from the application 35 executed by the core A within the time period specified by the application 35 executed by the core A, is present in a cache line in each group. Similarly, the outline sector flag 12e includes a flag indicating whether data, which is updated in response to the request from the application 35 executed by one of the cores B to C within the time period specified by the application 35 executed one of the cores B to C, is present in the cache lines in each group.

For example, the CPU 12d that includes the outline sector flag 12e updates the data stored in a cache line in the group 1 in accordance with the request from the application 35 executed by the core A within the time period specified by the application 35 executed by the core A. Then, the CPU 12d sets the flag in the group 1 to "1" from among the flags in the core A included in the outline sector flag 12e.

Subsequently, the CPU 12d updates the data stored in the cache line in the group A in accordance with the request from the application 35 executed by the core D within the time period specified by the application 35 executed by the core D. Then, the CPU 12d sets the flags in the group A to "1" from among the flags in the core D included in the outline sector flag 12e. If the application 35 executed by the core A requests a cache flush, the CPU 12d checks the flags in the group A in the outline sector flag 12e and recognizes that the flags in the group 1 are "1". Consequently, the CPU 12d checks only the cache lines in the group 1 without checking the cache lines in the group A.

### Advantage of the third embodiment

As described above, the CPU 12d includes the outline sector flag 12e that indicates, for each of the cores A to D, whether data updated within the time period specified by the application 35 is stored in a cache line in each group. When updating the data stored in the cache line in one of the groups in accordance with the request from the application 35 executed by the core A within the time period specified by, for example, the application 35 executed by the core A, the CPU 12d executes the following process. Namely, for the core A, the CPU 12d sets an outline sector flag indicating that the updated data is present in the cache line in the group 1.

Then, if the application 35 executed by the core A issues a flush request, the CPU 12d checks the outline sector flags in the core A and checks the cache lines in which the outline sector flag indicating that updated data is present is set. Then, from among the checked cache lines, the CPU 12d writes the updated data back to the memories 17 to 24.

Accordingly, the CPU 12d can efficiently execute a cache flush even when multiple cores are included. Specifically, even if each of the cores includes a shared cache memory, the CPU 12d can independently execute a cache flush for each core. Consequently, even if the CPU 12d includes multiple cores, the CPU 12d does not execute an unwanted cache flush; therefore, the CPU 12d efficiently executes a cache flush, thus preventing performance degradation of the information processing system 1b.

### [d] Fourth Embodiment

In a fourth embodiment, in addition to the functions performed by the CPU 12, the CPU 12b, and the CPU 12d, a description will be given of a CPU that uses only the data stored in a specific way, from among multiple ways included in each of the cache lines, as the target of the cache flush.

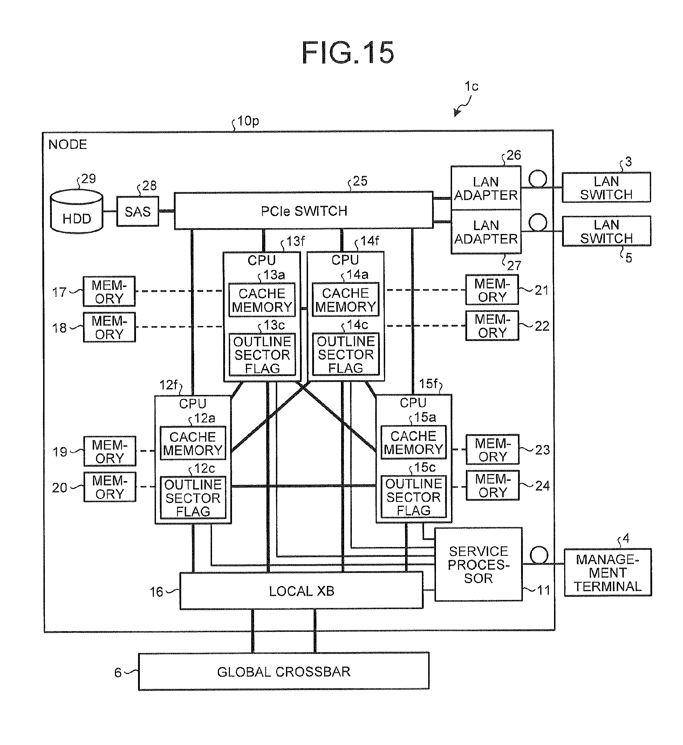

FIG. 15 is a schematic diagram illustrating the functional configuration of a node according to a fourth embodiment. FIG. 15 illustrates the functional configuration of a node 10p according to the fourth embodiment. The node 10p is a node included in an information processing system 1c having the same function as that in the first embodiment. Furthermore, the components in the node 10p illustrated in FIG. 15 having the same reference numerals as those in the first to the third embodiments have the same functions as those described in the first to the third embodiment; therefore, a description thereof will be omitted. In the example illustrated in FIG. 15, the node 10p includes multiple CPUs 12f to 15f.

The CPU 12f includes the cache memory 12a and outline sector flag 12c. Similarly, the other CPUs 13d to 15d include the cache memories 13a to 15a and outline sector flags 12c to 15c, respectively. Furthermore, similarly to the cache memories 12a to 15a according to the third embodiment, each of the cache memories 12a to 15a includes multiple cache lines "0" to "W" and multiple ways are present in each of the cache lines.

The outline sector flags 12c to 15c included in the respective CPUs 12f to 15f are the same as those described in the second embodiment; however, each of the CPUs 12f to 15f may also include the outline sector flags 12e to 15e described in the third embodiment. In the description below, the CPUs 13f to 15f have the same functions as those performed by the CPU 12f; therefore, a description thereof will be omitted.

The CPU 12f has the same function as that performed by the CPU 12 according to the first embodiment and the CPU 12b according to the second embodiment and has the following function. Namely, the CPU 12f stores data updated within the time period specified by the application 35 in only a specific way. Then, if the application 35 issues a flush request, the CPU 12f checks only specific ways in each of the cache lines and identifies the data in which a sector flag is set. Then, the CPU 12f writes the identified data back to the memories 17 to 24.

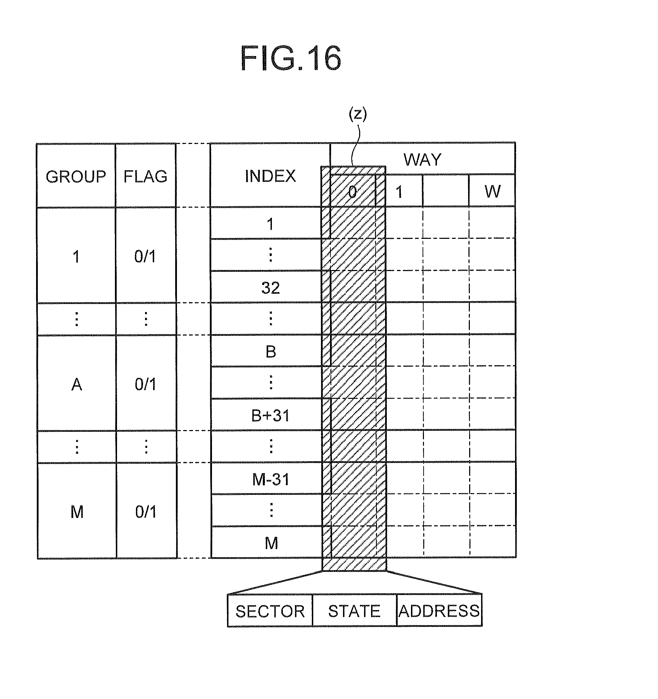

FIG. 16 is a schematic diagram illustrating an example of a process for limiting the cache flushing to a specific way. For example, if an update is executed within the time period specified by the application 35, the CPU 12f stores the data to be updated in a way of "0" in one of the cache lines included in the cache memory 12a. Furthermore, as illustrated in (z) of FIG. 16, from among cache tags of the way of "0", the CPU 12f stores a sector flag of "1", a state, and an address in the cache tag in the cache line that stores therein data.

If the application issues a flush request, the CPU 12f checks only the cache tag of the way of "0" and identifies cache lines that stores therein the sector flag of "1". Thereafter, from among the identified cache lines, the CPU 12f writes the data of the way of "0" back to the memories 17 to 24.

### Advantage of the fourth embodiment

As described above, the cache memory 12a includes multiple cache lines, each of which includes multiple ways "0" to "W". The CPU 12f stores data, which has been updated within the time period specified by an application, in the way "0" of one of the cache lines. When a flush request is issued, the CPU 12f checks only the way "0" in each cache line. Thereafter, after checking the way "0", the CPU 12f writes back, to the memories 17 to 24, the data stored in the way "0" in the cache line in which the sector flag indicating that the updated data is stored.

Accordingly, the CPU 12f can limit the target of a flush; therefore, it is possible to reduce the processing time for the flush and to improve the performance of the information processing system 1c. Furthermore, the CPU 12f writes data stored in a specific way back to the memories 17 to 24. Accordingly, for example, because data frequently used for the arithmetic process, such as data that is not to be written back to the memories 17 to 24, is stored in the ways "1" to "W", the CPU 12f can exclude the data from the cache flush. Consequently, the CPU 12f can improve the efficiency of the arithmetic process and thus improve the performance of the information processing system 1c.

### [e] Fifth Embodiment

In a fifth embodiment, a description will be given of a CPU that includes cores, Level 1 (L1) caches, Level 2 (L2) caches, sector flags arranged for cache lines, and outline sector flags arranged for each core.

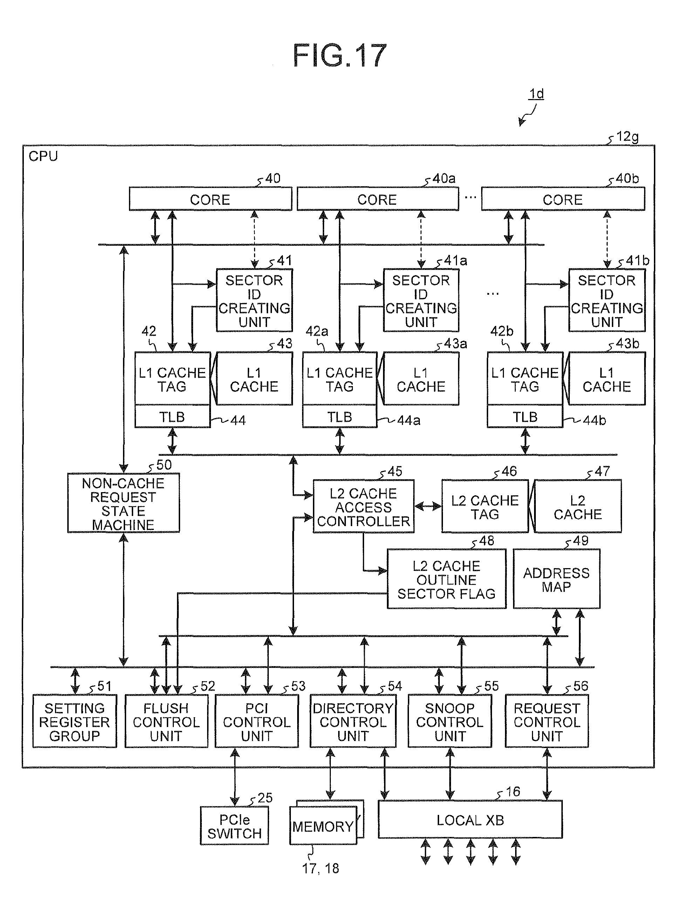

FIG. 17 is a schematic diagram illustrating the functional configuration of a CPU according to a fifth embodiment. A CPU 12g is a CPU included in the information processing system 1c having the same configuration as that in the first embodiment. Similarly to the CPU 12, the CPU 12b, the CPU 12d, and the CPU 12f, the CPU 12g is one of the multiple CPUs arranged in a node included in an information processing system 1d. FIG. 17 illustrates the functional configuration of the CPU 12g according to the fifth embodiment.

In the example illustrated in FIG. 17, the CPU 12g is connected to the local XB 16, the memory 17, the memory 18, and the PCIe switch 25. Furthermore, the CPU 12g includes cores 40 to 40b, sector identification (ID) creating units 41 to 41b, L1 cache tags 42 to 42b, L1 caches 43 to 43b, and translation lookaside buffers (TLBs) 44 to 44b.

Furthermore, the CPU 12g includes an L2 cache access controller 45, an L2 cache tag 46, an L2 cache 47, an L2 cache outline sector flag 48, an address map 49, and a non-cache request state machine 50. Furthermore, the CPU 12g includes a setting register group 51, a flush control unit 52, a PCI control unit 53, a directory control unit 54, a snoop control unit 55, and a request control unit 56.

The cores 40a and 40b have the same function as that performed by the core 40 and the sector ID creating units 41a and 41b have the same function as that performed by the sector ID creating unit 41; therefore, descriptions thereof will be omitted below. Furthermore, the L1 cache tags 42a and 42b have the same function as that performed by the L1 cache tag 42 and the L1 caches 43a and 43b have the same function as that performed by the L1 cache 43; therefore, a description thereof will be omitted below. Furthermore, the TLBs 44a and 44b have the same function as that performed by the TLB 44; therefore, a description thereof will be omitted below.

The core 40 is an arithmetic unit that executes an arithmetic process by using data stored in the L1 cache 43. The sector ID creating unit 41 creates a sector ID in accordance with an instruction code and setting information on a register output from the core 40 and outputs the created ID to the L1 cache tag 42. The sector ID mentioned here is information indicating whether an update is executed within the time period specified by the application executed by the core 40.

The L1 cache tag 42 is tag data of the L1 cache 43 and stores therein an address, a state, Least Recently Used (LRU) information to be replaced, and the sector ID of data stored in cache lines in the L1 cache 43.

The L1 cache 43 is a cache memory that can be accessed at high speed and that caches part of data stored in the memory 17, the memory 18, and the L2 cache 47. Furthermore, the L1 cache 43 is a primary cache dedicated to the core 40. For example, the capacity of the L1 cache 43 is 64 kilobytes for each of the instruction area and the data area. Furthermore, the TLB 44 converts the virtual address that is output by the core 40 to the physical address by using a conversion table.

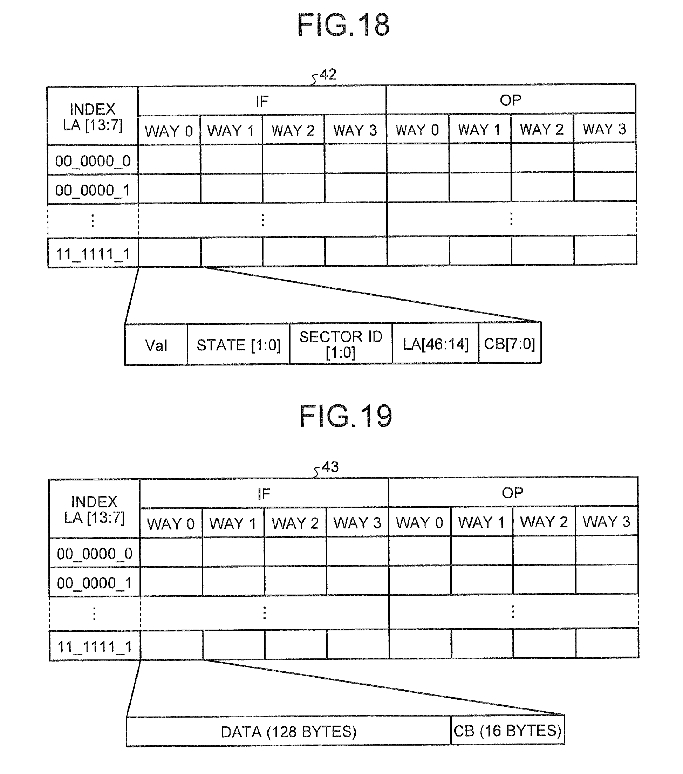

In the following, the L1 cache tag 42 and the L1 cache 43 will be described with reference to FIGS. 18 and 19. FIG. 18 is a schematic diagram illustrating an L1 cache tag. In the example illustrated in FIG. 18, the L1 cache tag 42 uses an index of a virtual address, i.e., the low-order 7 bits from "00_0000_0" to "11_1111_1", as an index. Furthermore, for each index, the L1 cache tag 42 stores tag data (IF) in an area in which an instruction is cached and stores tag data in an area in which data is cached, i.e., Operand (OP).

Furthermore, the L1 cache tag 42 stores therein tag data of way 0 to way 3 for each index. Furthermore, the L1 cache tag stores therein, as tag data, a Val; a 2-bit state [1:0]; a 2-bit sector ID [1:0]; an LA [46:14] that is the high-order 33 bits of the logical address; and a check bit (CB) [7:0] that is a check bit. In a description below, it is assumed that the state "00" indicates Invalid (I), the state "01" indicates Share (S), the state "10" indicates Exclusive (E), and the state "11" indicates Modify (M).

In the following, the L1 cache 43 will be described with reference to FIG. 19. FIG. 19 is a schematic diagram illustrating an L1 cache. In the example illustrated in FIG. 19, similarly to the L1 cache tag 42, the L1 cache 43 includes an area, in which an instruction is cached, and an area, in which data is cached. Each of the cache lines included in the L1 cache 43 is associated with each of the indexes in the logical address and has four ways, i.e., ways "0" to "3". Furthermore, 128-byte data and a 16-byte check bit are stored in each way in each cache line.

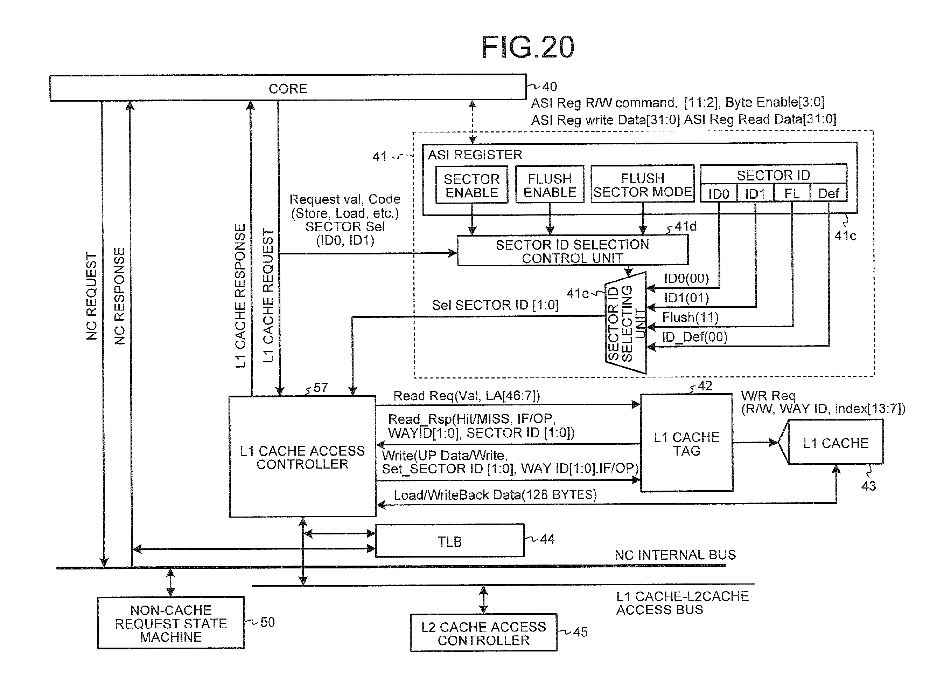

In the following, a process executed by the core 40, the sector ID creating unit 41, the L1 cache tag 42, the L1 cache 43, and the TLB 44 will be described below in detail with reference to FIG. 20. FIG. 20 is a schematic diagram illustrating a process performed by a sector ID creating unit according to the fifth embodiment. In the example illustrated in FIG. 20, the sector ID creating unit 41 includes an ASI register 41c, a sector ID selection control unit 41d, and a sector ID selecting unit 41e.

Furthermore, in the example illustrated in FIG. 20, the ASI register 41c stores therein a sector enable and a flush enable that are accessed using the privilege instruction of a hypervisor (HPV). Furthermore, the ASI register 41c stores therein a flush sector mode indicating the start and the end of the time period specified by an application executed by the core 40.

If the core 40 sets a sector flag, the core 40 stores "1" in the sector enable, whereas, if the core 40 does not set a sector flag, the core 40 stores "0" in the sector enable. When the core 40 enables the function of the sector flush, the core 40 stores "1" in the flush enable. In contrast, when the core 40 disables the function of the sector flush, the core 40 stores "0" in the flush enable. Furthermore, when the core 40 executes the sector flush, the core 40 stores "1" in the flush sector mode. When the core 40 executes other processes, the core 40 stores "0" in the flush sector mode.

The flush sector mode is stored in a register that can be accessed by an application executed by the core 40. The ASI register 41c stores therein a 2-bit sector ID that is previously defined. Specifically, the ASI register 41c stores therein, as sector IDs, "00" indicating ID0, "01" indicating ID1, "11" indicating FL (Flush), and "00" indicating Def (Default).

For example, the core 40 issues a command (ASI Reg R/W command) for reading or storing an ASI register to the ASI register 41c. The command stores therein a 10-bit address (Address [11:2]) and a 4-bit byte enable (Byte Enable [3:0]).

If the core 40 requests the ASI register 41c to store data, the core 40 outputs 32-bit data (ASI Reg Write Data [31:0]) that is the storage target. In contrast, if the core 40 requests data to be read, the ASI register 41c outputs the read 32-bit data (ASI Reg Read Data [31:0]) to the core 40.

Furthermore, the core 40 issues an L1 cache request that uses, as a field, an L1 cache request that in turn uses a Request val, a Request ID, a Code, a Logic Address, a Sector Sel, and Store Data as a field. Specifically, the core 40 issues an L1 cache request to an L1 cache access controller 57 and the sector ID selection control unit 41d.

The Request val (Request Value) is information indicating that data is a request. The Request ID is an 8-bit identifier for identifying a request. The Code is information indicating the contents of the request, such as a request for data to be stored or data to be loaded. The Logic Address is a 41-bit virtual address that is the target of the request.

Furthermore, the Sector Sel is information indicating a sector ID, the creation of which is requested by the sector ID creating unit 41, and therein is stored, for example, "ID0" or "ID1". The Store Data is information added to the request to store data and is 128-byte data stored in the L1 cache 43.

Furthermore, the core 40 issues, to the non-cache request state machine 50, an NC request that is a read request or a write request with respect to an NC (Non coherency) space. Specifically, the core 40 issues an NC request that contains, as a field, "Req val", "Request ID", "Code", "Logic Address (LA)", "Byte Enable (BE)", and "Store Data".

The "Req val" is information indicating that data is a request signal. The "Request ID" is 8-bit information for identifying a request. The "Code" is information that indicates the contents of the request. For example, the "Code" stores therein "Store", indicating that data is stored, and "Load", indicating that data is read.

Furthermore, the "Logic Address" is a 48-bit virtual address to be requested. The "Byte Enable" is 129-bit information indicating enabling. The "Store Data" is 128-byte data that is stored when the type of a request is "Store".

The ASI register 41c outputs values of the sector enable, the flush enable, and the flush sector mode to the sector ID selection control unit 41d. Furthermore, the ASI register 41c outputs sector IDs to the sector ID selecting unit 41e. The sector ID selection control unit 41d acquires the L1 cache request issued by the core 40 and acquires the value of the Sector Sel in the L1 cache request. The sector ID selection control unit 41d acquires the values of the sector enable, the flush enable, and the flush sector mode from the ASI register 41c.

If the value of the sector enable is "0", the sector ID selection control unit 41d instructs the sector ID selecting unit 41e to select the Def (00). If the values of the sector enable, the flush enable, and the flush sector mode are all "1" and the content of the L1 cache request is the storing of data, the sector ID selection control unit 41d instructs the sector ID selecting unit 41e to output the FL (11). Specifically, for the data that has been updated within the time period specified by an application, the sector ID selection control unit 41d instructs the sector ID selecting unit 41e to output the sector ID "11".

Furthermore, if the sector enable, the flush enable, and the flush sector mode are "1" and if the content of the L1 cache request is not the storing of data, the sector ID selection control unit 41d performs the process described below. Furthermore, if the sector enable is "1" and if one of or both the flush enable and the flush sector mode is/are "0", the sector ID selection control unit 41d performs the same process, as described below.

Namely, the sector ID selection control unit 41d identifies the value of the Sector Sel in the L1 cache request. If the value of the Sector Sel is "ID1", the sector ID selection control unit 41d instructs the sector ID selecting unit 41e to select the ID1. If the value of the Sector Sel is "ID0", the sector ID selection control unit 41d instructs the sector ID selecting unit 41e to select the ID0.

The sector ID selecting unit 41e acquires each of the sector IDs from the ASI register 41c. Then, the sector ID selecting unit 41e outputs, to the L1 cache access controller 57, the sector IDs notified by the sector ID selection control unit 41d.

The L1 cache access controller 57 acquires an L1 cache request from the core 40. If the L1 cache request is a request for data to be read, the L1 cache access controller 57 reads, by using the L1 cache tag 42, data from the L1 cache 43.

Furthermore, if data to be read is not stored in the L1 cache 43 and thus a cache miss occurs, the L1 cache access controller 57 performs the following process. Namely, the L1 cache access controller 57 transmits a request for the data to the L2 cache access controller 45 via an L1 cache-L2 cache access bus.

When the L1 cache access controller 57 transmits the request for the data to the L2 cache access controller 45, the L1 cache access controller 57 converts the logical address to the physical address by using the TLB 44. Then, the L1 cache access controller 57 transmits the converted physical address to the L2 cache access controller 45.

Then, the L1 cache access controller 57 acquires a sector ID together with the data from the L2 cache access controller 45. The L1 cache access controller 57 stores the acquired data in the L1 cache 43 and the acquired sector ID in the L1 cache tag 42 without changing the sector ID.

Thereafter, the L1 cache access controller 57 searches the L1 cache 43 for data to be read. Then, because a cache hit occurs, the L1 cache access controller 57 acquires the data and transmits the acquired data to the core 40 as an L1 cache response. The L1 cache response contains, as a field, the "Req val" indicating a response, the "Request ID" of the read request, and the "Read Data" that corresponds to read 128-byte data.

Furthermore, if the L1 cache request indicates a request for data to be stored, the L1 cache access controller 57 acquires a sector ID from the sector ID creating unit 41. Then, the L1 cache access controller 57 stores the data in the L1 cache 43 and also stores a sector ID, which is acquired from the sector ID creating unit 41, in the L1 cache tag 42.

Furthermore, when replacing the data stored in the L1 cache 43, the L1 cache access controller 57 transmits, together with the data stored in the L1 cache 43, the sector ID contained in the tag data to the L2 cache access controller 45. Furthermore, if the data stored in the L1 cache 43 is updated and the sector ID is changed, the L1 cache access controller 57 transmits the changed sector ID to the L2 cache access controller 45.

Furthermore, if the flush control unit 52, which will be described later, performs a flush, the L1 cache access controller 57 transmits, together with the data stored in the L1 cache 43, the sector ID contained in the tag data to the L2 cache access controller 45. Then, the L2 cache access controller 45 stores the sector ID acquired from the L1 cache access controller 57 in the L2 cache tag 46 and stores the data in the L2 cache 47.

As described above, for the data updated within the time period specified by an application, the L1 cache access controller 57 stores the sector ID "11", which indicates that an update has been executed within the time period specified by the application, as tag data in the L1 cache tag 42. If a replacement or a flush is executed, the L1 cache access controller 57 transmits, together with the data, the sector ID "11" indicating that an update has been executed within the time period specified by an application to the L2 cache access controller 45.

If the L1 cache access controller 57 determines that the L1 cache request is a request for a Read, the L1 cache access controller 57 issues a Read Req, which is a read request, to the L1 cache tag 42. At this point, a Val indicating that the request is a read request and the logical address LA [46:7] to be read is stored in the Read Req.

Furthermore, if the L1 cache access controller 57 determines that the request contains an L1 cache request, the L1 cache access controller 57 performs the following process. Namely, the L1 cache access controller 57 issues a Write that is a store request. At this point, data to be written, a sector ID received from the sector ID creating unit 41, a way ID, and information indicating whether data is instruction data are stored in the Write.

Furthermore, by issuing a request or a response between the L1 cache and the L2 cache, the L1 cache access controller 57 performs, with the L2 cache access controller 45, a request for or transmission of a sector ID and data.

When the L1 cache tag 42 receives a Read Req from the L1 cache access controller, the L1 cache tag 42 determines whether the high-order 33 bits of the acquired logical address is stored in the tag data of the index that matches the low-order 7 bits of the acquired logical address. If tag data containing the high-order 33 bits of the acquired logical address is present, the L1 cache tag 42 determines that a cache hit has occurred. In contrast, if no tag data containing the high-order 33 bits of the acquired logical address is present, the L1 cache tag 42 determines that a cache miss has occurred.

Then, the L1 cache tag 42 issues a Read Rep (Read Response) corresponding to a response to the L1 cache access controller 57. At this point, the Read Rep contains therein information indicating whether a cache hit occurs, information indicating whether data is instruction data, a way ID, and a sector ID. Furthermore, if a cache hit has occurred, the L1 cache tag 42 issues a read request to the L1 cache 43 and allows the L1 cache access controller 57 to output data, which is to be read, to the L1 cache 43.

Furthermore, the L1 cache tag 42 receives a Write that is a write request from the L1 cache access controller 57. Then, the L1 cache tag 42 stores tag data in a way indicated by the sector ID and way ID of the write request and stores data in the L1 cache 43.

If the L1 cache tag 42 stores therein data on a virtual address that is to be written, the L1 cache tag 42 changes the state of the tag data and changes the sector ID of the tag data to the sector ID acquired from the L1 cache access controller 57. Specifically, the L1 cache tag 42 stores, in the tag data, the sector ID indicating that an update is executed within the time period specified by an application executed by the core 40.

Furthermore, when controlling an access to an UC area and when receiving an NC request from the core 40, the non-cache request state machine 50 executes a process via a PCIe or the like. For example, if each of the cores 40 to 40b acquires an NC request, which is a request for data to be stored or to be acquired with respect to an I/O device, such as the HDD 29, the non-cache request state machine 50 issues the acquired NC request to the PCI control unit 53. Then, if the non-cache request state machine 50 acquires a response to the request from the PCI control unit 53, the non-cache request state machine 50 transmits the acquired response to the cores 40 to 40b as an NC response.

A description will be given here by referring back to FIG. 17. The L2 cache access controller 45 is an access controller for the L2 cache tag 46 or the L2 cache 47 and is a pipeline for accessing the L2 cache tag 46 or the L2 cache 47. By performing the same process as that performed by the L1 cache access controller 57, the L2 cache access controller 45 controls the data stored in the L2 cache 47. The L2 cache access controller 45 has the function of performing a serializing process that serializes the same addresses.

The L2 cache tag 46 stores therein the same tag data, for the L2 cache 47, stored in the L1 cache tag 42. The L2 cache 47 is a secondary cache memory shared by the cores 40 to 40b. Furthermore, the L2 cache 47 includes multiple cache lines that are divided into multiple groups.

The L2 cache outline sector flag 48 has flags, for each core, that is used to determine whether data updated within the time period specified by an application executed by each of the cores 40 to 40b is stored in a cache line in each group. Specifically, the L2 cache outline sector flag 48 is the same flag as the outline sector flag 12e according to the third embodiment.

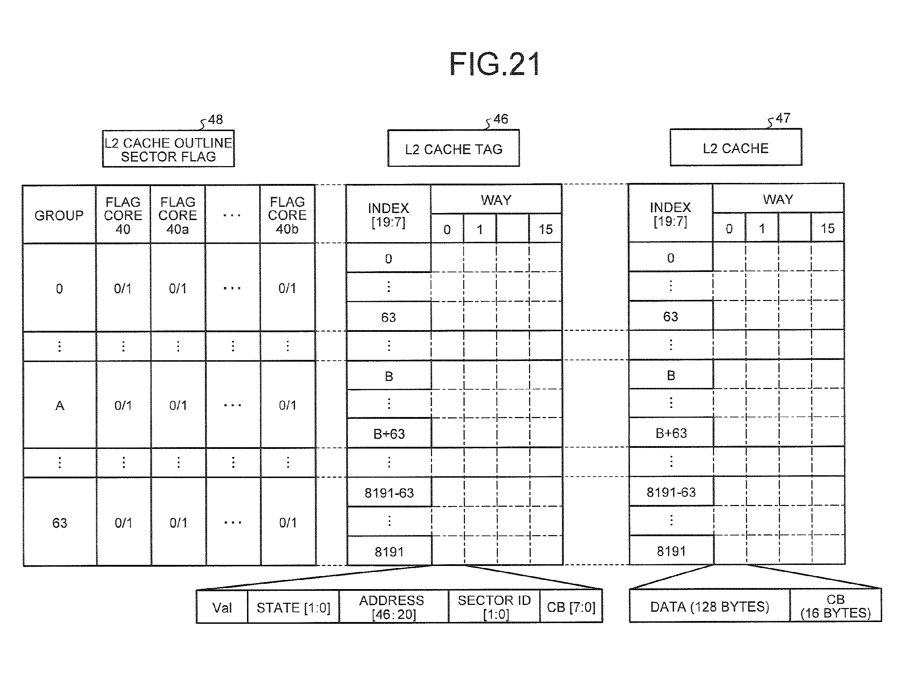

In the following, the relationship of the L2 cache tag 46, the L2 cache 47, and the L2 cache outline sector flag 48 will be described with reference to FIG. 21. FIG. 21 is a schematic diagram illustrating an L2 cache tag, an L2 cache, and an L2 cache outline sector flag. As illustrated in FIG. 21, similarly to the outline sector flag 12e, the L2 cache outline sector flag 48 includes, for each of the cores 40 to 40b, flags indicating whether data that has been updated within the time period specified by an application is present in each group of cache lines.

Specifically, for each group obtained by grouping each of the cache lines included in the L2 cache 47 into "0" to "63", the following flag is stored in the L2 cache outline sector flag 48. Namely, the L2 cache outline sector flag 48 stores therein flags indicating, for each of the cores 40 to 40b, whether data updated within the time period specified by an application executed by each of the cores 40 to 40b is present in each group of cache lines.

Furthermore, in the example illustrated in FIG. 21, the L2 cache tag 46 and the L2 cache 47 include multiple cache lines, each of which is associated with an index indicated by the low-order 13 bits of the physical address. In the example illustrated in FIG. 21, a value of an index is represented by decimals. Furthermore, the L2 cache tag 46 and the L2 cache 47 include, for each cache line, ways having way IDs "0" to "15".

Furthermore, similarly to the L1 cache tag 42, a Val, a state, the high-order 27 bits of an address, a sector ID, and a CB are stored, as tag data, in each way in each cache line in the L2 cache tag 46. Furthermore, similarly to the L1 cache 43, 128-byte data and 16-byte data are stored in each way in each cache line in the L2 cache 47.

A description will be given here by referring back to FIG. 17. The address map 49 stores therein, in an associated manner, a physical address to be requested and an identifier of a CPU that accesses the storage area indicated by the physical address and then converts the physical address to the identifier of the CPU. Specifically, if the CPU 12g issues a request for an access to a memory connected to another CPU, the address map 49 recognizes, from the physical address to be accessed, an identifier of a CPU that is the destination of the request. Then, the address map 49 notifies the request control unit 56 of the identifier of the CPU that is the destination of the request.

The setting register group 51 contains multiple registers that perform various settings of the CPU 12g. The flush control unit 52 performs a cache flush on the L2 cache 47 due to an instruction from any of the cores 40 to 40b. Specifically, the flush control unit 52 performs a process for writing the data stored in the L2 cache 47 back to the memories 17 and 18. Furthermore, if data to be written back is data cached from a memory accessed by a CPU other than the CPU 12g, the flush control unit 52 writes the data back to the source memory.

The PCI control unit 53 is a root complex device that makes the CPU connection with the PCI express. The directory control unit 54 controls the memory access using the NUMA technology. Furthermore, if the directory control unit 54 obtains a memory request using, for example, Direct Memory Access (DMA), the directory control unit 54 maintains cache coherency by using directory information stored in the memory 17 and the memory 18. For example, by using the snoop control unit 55, the directory control unit 54 issues a snoop to other CPUs or responds to the snoop issued by another CPU.

If the snoop control unit 55 receives a snoop from one of the CPUs other than the CPU 12g via the local XB 16, the snoop control unit 55 checks the L2 cache 47 and replies with a check result as a response. Furthermore, if the snoop control unit 55 is requested to issue a snoop from the directory control unit 54, the snoop control unit 55 transmits the snoop to CPUs other than the CPU 12g. For example, if the state of data to be snooped stored in the L2 cache 47 is "M", the snoop control unit 55 transmits cache data as a response to the snoop.

The request control unit 56 manages, when a cache miss occurs in the L2 cache 47, the processes from the issuing of requests to the other CPUs to the reception of responses from the other CPUs. For example, the request control unit 56 outputs a physical address to the address map 49 and acquires an identifier of a CPU that corresponds to the request destination. Then, the request control unit 56 outputs the request to the local XB 16 by using the acquired identifier as the destination.

Furthermore, the request control unit 56 includes multiple entries each of which retains an address to be requested. If a request is issued from one of the cores 40 to 40b to the physical address that is currently being processed, the request control unit 56 stores the request in the entry in order to allow the subsequent request to wait. Then, if the request control unit 56 issues the request stored in the entry, the request control unit 56 attaches the identifier of the entry that stores therein the request to the request and then outputs the request.

The local XB 16 is a router for an interconnection and transmits a request to the destination that is associated with an identifier of a CPU. Furthermore, the local XB 16 packetizes a request to be transmitted or attaches a cyclic redundancy check (CRC) value.

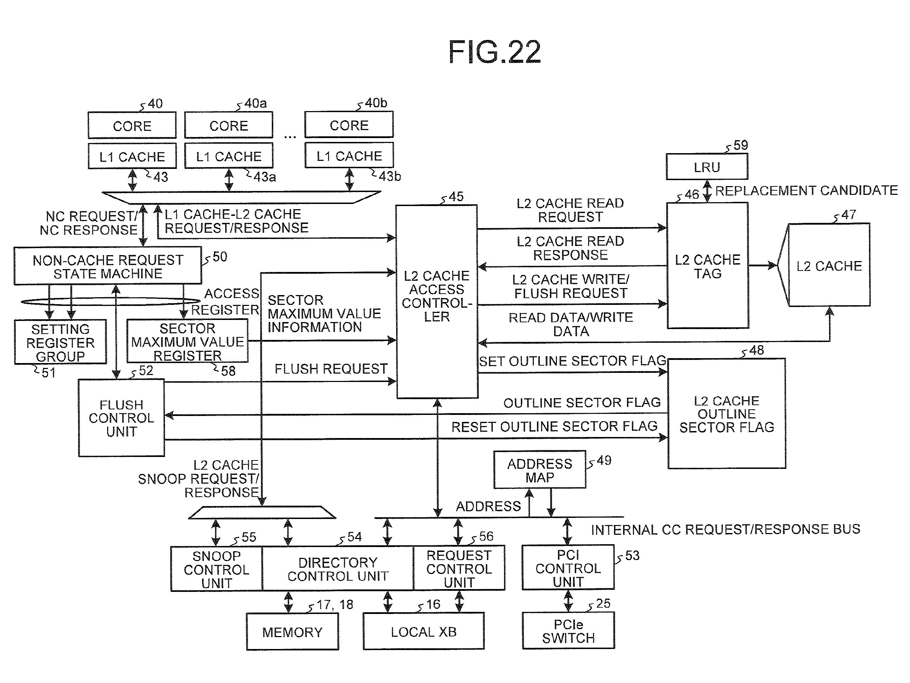

In the following, an example will be described with reference to FIG. 22 of how a signal is transmitted and received by the L2 cache access controller 45. FIG. 22 is a schematic diagram illustrating a signal transmitted and received by an L2 cache access controller according to the fifth embodiment. For example, in the example illustrated in FIG. 22, the L2 cache access controller 45 receives, from the L1 cache access controller 57, a request transmitted between an L1 cache and an L2 cache.

Then, the L2 cache access controller 45 issues an L2 cache read request to the L2 cache tag 46 and receives an L2 cache read response from the L2 cache tag 46. Then, if a cache hit is contained in the L2 cache read response, the L2 cache access controller 45 acquires read data from the L2 cache 47 and acquires a sector ID from the L2 cache tag 46. Then, the L2 cache access controller 45 outputs the acquired read data and the sector ID to the L1 cache access controller 57 as responses.

Furthermore, if a cache miss is contained in the L2 cache read response, the L2 cache access controller 45 requests the request control unit 56 to issue a request. Then, the request control unit 56 issues a request and acquires data that is requested.

For example, the request control unit 56 acquires data from the memories 17 and 18 via the directory control unit 54. Furthermore, for example, the request control unit 56 issues a request to the CPUs other than the CPU 12g via the local XB 16 and acquires data from the shared area in a memory connected to the CPUs other than the CPU 12g. Then, the request control unit 56 outputs the acquired data to the L2 cache access controller 45.

Furthermore, if the L2 cache access controller 45 acquires data from the request control unit 56, the L2 cache access controller 45 issues an L2 cache write request to the L2 cache tag 46 and transmits write data to the L2 cache 47. Specifically, the L2 cache access controller 45 stores new data in the L2 cache 47.

If a replacement of an L1 cache occurs and if the L2 cache access controller 45 acquires data output from the L1 cache, the L2 cache access controller 45 issues an L2 cache write request to the L2 cache tag 46 and updates the output data. Furthermore, the L2 cache access controller 45 receives a sector ID together with the data output from the L1 cache and stores the received sector ID in the L2 cache tag 46.

Furthermore, when the L2 cache access controller 45 stores data in the L2 cache 47, the L2 cache access controller 45 performs the following process. Namely, the L2 cache access controller 45 stores an outline sector flag in the L2 cache outline sector flag 48 in accordance with the sector ID of the data to be stored.

Specifically, if the sector ID is "11", the L2 cache access controller 45 stores the outline sector flag "1", which indicates that the updated data is present in a group containing a cache line that stores therein the data, in the L2 cache outline sector flag 48.

Furthermore, when storing an outline sector flag, the L2 cache access controller 45 identifies, by using an arbitrary method, a core that executes an application that updates the data and then stores an outline sector flag of the identified core. For example, the L2 cache access controller 45 may also identify, by using the request ID, a core that executes an application that updates the data. Furthermore, the L2 cache access controller 45 selects a cache line that is to be replaced by using an LRU stored in an LRU 59.

When acquiring a flush request issued by one of the cores 40 to 40b, the non-cache request state machine 50 instructs the flush control unit 52 to perform a flush. Then, the flush control unit 52 acquires an outline sector flag from the L2 cache outline sector flag 48 and issues a flush request with respect to the cache line associated with the outline sector flag to the L2 cache access controller 45.

Specifically, from among the flags included in the L2 cache outline sector flag 48, the flush control unit 52 checks the outline sector flag of the core that issued the flush request and searches for a group that stores therein the flag of "1". Then, the flush control unit 52 sequentially issues, to the L2 cache access controller 45, flush requests with respect to cache lines in a group in which the flag "1" is detected. If the flush control unit 52 ends the issuing of the flush requests, the flush control unit 52 resets the L2 cache outline sector flag 48 in accordance with both a group of a cache line, which is the target of the flush request, and a core that issues a flush request.

In contrast, the L2 cache access controller 45 performs a cache flush of the L2 cache 47 in accordance with the flush request received from the flush control unit 52. Specifically, the L2 cache access controller 45 checks tag data in a cache line that is the target of the flush request and searches each way for an entry in which the sector ID is "11" and the state is "M". If the L2 cache access controller detects an entry in which the sector ID is "11" and the state is "M", the L2 cache access controller performs a flush on the detected entry.

Specifically, the L2 cache access controller 45 acquires, from the L2 cache 47, data of the entry in which the sector ID is "11" and the state is "M" and updates the state to "I". Then, the L2 cache access controller 45 transmits the acquired data to the directory control unit 54 and requests that the data is written back to the memories 17 and 18 or to a memory connected to the other CPUs.

If the directory control unit 54 writes data back to a memory other than the memories 17 and 18 that are connected to the CPU 12g, similarly to the request control unit 56, the directory control unit 54 identifies a CPU connected to the memory to which data is written back by using the address map 49. Then, the directory control unit 54 transmits the data to the identified CPU via the local XB 16.

Furthermore, on the basis of directory information, the directory control unit 54 requests the snoop control unit 55 to issue a snoop and allows the L2 cache access controller 45 or the other CPU to issue a snoop. When the L2 cache access controller 45 acquires a snoop issued by the snoop control unit 55 or a snoop received from the other CPU by the request control unit 56, the L2 cache access controller 45 outputs the data stored in the L2 cache 47.

At this point, in accordance with the request from the cores 40 to 40b, the non-cache request state machine 50 sets the maximum value of the number of ways to be flushed in a sector maximum value register 58. Specifically, the non-cache request state machine 50 sets, in the sector maximum value register 58 and for each sector ID value, the number of pieces of tag data that can be registered in a way in each cache line.

If the L2 cache access controller 45 stores new data and thus if the total amount of which exceeds the amount of data that can be registered, the L2 cache access controller 45 performs a replacement in accordance with the sector ID value of the data to be stored. For example, if the sector ID of the new data to be stored is "11", the L2 cache access controller 45 replaces data of the sector ID of "01" or the sector ID of "10". Furthermore, if the sector ID of the new data to be stored is "01", the L2 cache access controller 45 replaces the data of the sector ID of "01" or the sector ID of "00".

The cores 40 to 40b, the sector ID creating units 41 to 41b, the TLBs 44 to 44b, the L2 cache access controller 45, the L2 cache outline sector flag 48, and the non-cache request state machine are electronic circuits. Furthermore, the flush control unit 52, the PCI control unit 53, the directory control unit 54, the snoop control unit 55, the request control unit 56, and the L1 cache access controller 57 are electronic circuits. Examples of the electronic circuits used here include integrated circuits, such as application specific integrated circuits (ASICs) or field programmable gate arrays (FPGAs), central processing units (CPUs), or micro processing units (MPUs).

Furthermore, the L1 cache tags 42 to 42b, the L1 caches 43 to 43b, the L2 cache tag 46, the L2 cache 47, and the LRU 59 are storage devices, such as a semiconductor memory device including a random access memory (RAM) and a flash memory (flash memory). The setting register group 51 and the sector maximum value register 58 are registers.

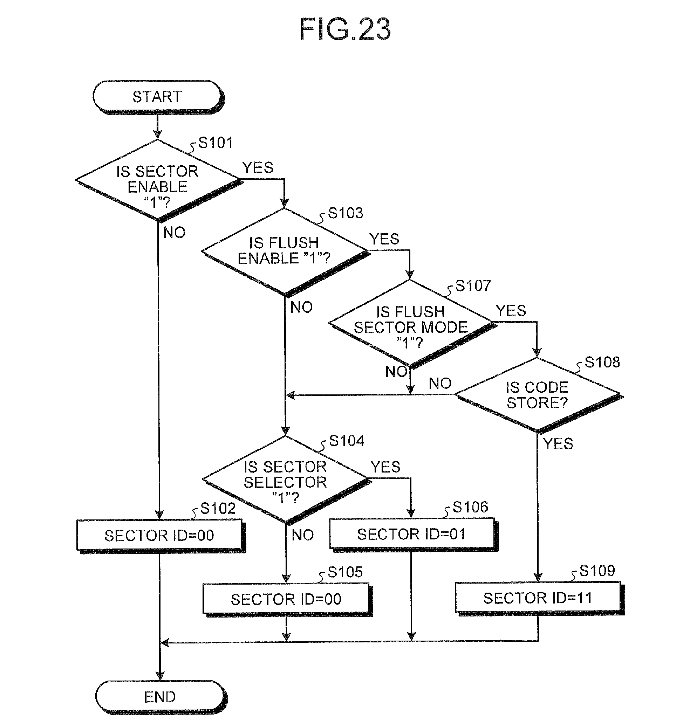

In the following, the flow of a process for creating a sector ID stored in the L1 cache tag 42 by the sector ID creating unit 41 will be described with reference to FIG. 23. FIG. 23 is a flowchart illustrating the flow of a process for creating a sector ID that is stored in an L1 cache tag.

For example, the sector ID creating unit 41 determines whether the sector enable is "1" (Step S101). If the sector enable is not "1" (No at Step S101), i.e., if a flush using a sector flag is not performed, the sector ID creating unit 41 sets a sector ID to "00" (Step S102) and ends the process. In contrast, if the sector enable is "1" (Yes at Step S101), the sector ID creating unit 41 determines whether the flush enable is "1" (Step S103).

If the flush enable is not "1" (No at Step S103), the sector ID creating unit 41 determines whether a sector selector is "1" (Step S104). If the sector selector is not "1" (No at Step S104), the sector ID creating unit 41 sets a sector ID to "00" (Step S105) and ends the process. In contrast, if the sector selector is "1" (Yes at Step S104), the sector ID creating unit 41 sets a sector ID to "01" (Step S106) and ends the process.

Furthermore, if the sector ID creating unit 41 determines that the flush enable is "1" (Yes at Step S103), the sector ID creating unit 41 determines whether the flush sector mode is "1" (Step S107). If the flush sector mode is "1" (Yes at Step S107), the sector ID creating unit 41 determines whether the Code of the L1 cache request is "Store" (Step S108).

Furthermore, if the Code is "Store" (Yes at Step S108), the sector ID creating unit 41 sets the sector ID to "11" (Step S109) and ends the process. In contrast, if the flush sector mode is not "1" (No at Step S107) and if the Code is not "Store" (No at Step S108), the sector ID creating unit 41 performs the process at Step S104.

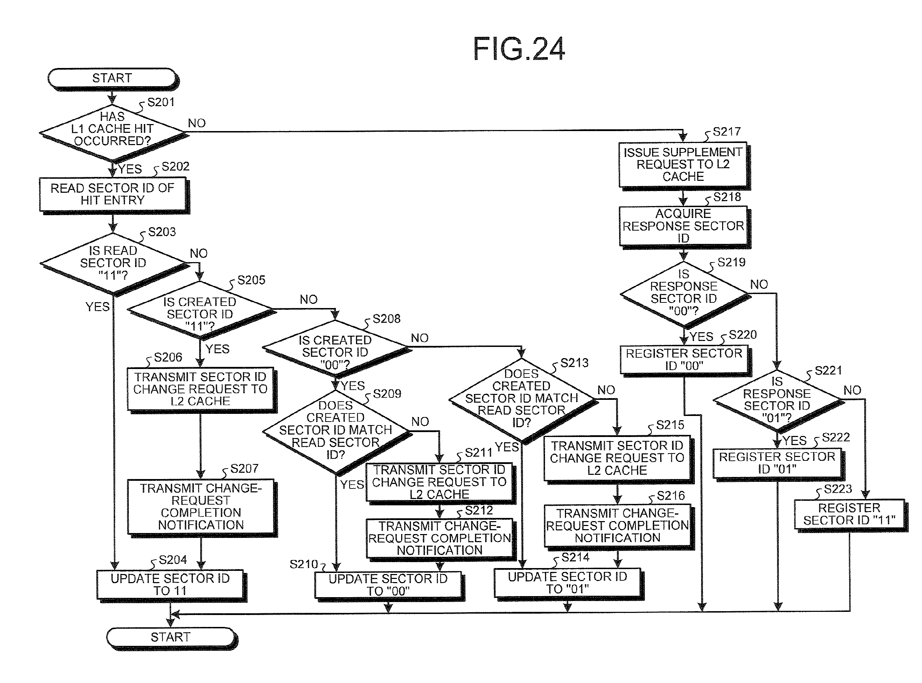

In the following, the flow of a process for registering/updating a sector ID of the L1 cache tag 42 performed by the L1 cache access controller 57 will be described with reference to FIG. 24. FIG. 24 is a flowchart illustrating the flow of a process for registering/updating a sector ID of an L1 cache. For example, the L1 cache access controller 57 searches the L1 cache by using the L1 cache tag 42 and determines whether an L1 cache hit has occurred (Step S201).

If the L1 cache access controller 57 determines that an L1 cache hit has occurred (Yes at Step S201), the L1 cache access controller 57 reads the sector ID of the hit entry (Step S202). Then, the L1 cache access controller 57 determines whether the read sector ID is "11" (Step S203). If the sector ID is "11" (Yes at Step S203), the L1 cache access controller 57 updates the sector ID to "11" (Step S204) and ends the process.

In contrast, if the read sector ID is not "11" (No at Step S203), the L1 cache access controller 57 determines whether the sector ID created by the sector ID creating unit 41 is "11" (Step S205). If the created sector ID is "11" (Yes at Step S205), the L1 cache access controller 57 transmits, to the L2 cache access controller 45, a sector ID change request (Step S206).

Furthermore, when the L1 cache access controller 57 receives a change-request completion notification from the L2 cache access controller 45 (Step S207), the L1 cache access controller 57 updates the sector ID to "11" (Step S204) and ends the process. Furthermore, if the created sector ID is not "11" (No at Step S205), the L1 cache access controller 57 determines whether the created sector ID is "00" (Step S208).

Furthermore, if the created sector ID is "00" (Yes at Step S208), the L1 cache access controller 57 determines whether the created sector ID matches the read sector ID (Step S209). If the created sector ID matches the read sector ID (Yes at Step S209), the L1 cache access controller 57 updates the sector ID to "00" (Step S210) and ends the process.

If the created sector ID does not match the read sector ID (No at Step S209), the L1 cache access controller 57 transmits, to the L2 cache access controller 45, a sector ID change request (Step S211). Furthermore, when the L1 cache access controller 57 receives a change-request completion notification from the L2 cache access controller 45 (Step S212), the L1 cache access controller 57 updates the sector ID to "00" (Step S210) and ends the process.

If the created sector ID is not "00" (No at Step S208), the L1 cache access controller 57 determines whether the created sector ID matches the read sector ID (Step S213). If the created sector ID matches the read sector ID (Yes at Step S213), the L1 cache access controller 57 updates the sector ID to "01" (Step S214) and ends the process.

In contrast, if the created sector ID does not match the read sector ID (No at Step S213), the L1 cache access controller 57 transmits, to the L2 cache access controller 45, a sector ID change request (Step S215). Furthermore, when the L1 cache access controller 57 receives a change-request completion notification from the L2 cache access controller 45 (Step S216), the L1 cache access controller 57 updates the sector ID to "01" (Step S214) and ends the process.

Furthermore, if an L1 cache hit does nor occur (No at Step S201), the L1 cache access controller 57 issues a supplement request to the L2 cache access controller 45 (Step S217). Then, the L1 cache access controller 57 acquires a sector ID contained in a response (Step S218). Then, the L1 cache access controller 57 determines whether the sector ID acquired from the response is "00" (Step S219).

At this point, if the sector ID acquired from the response is "00" (Yes at Step S219), the L1 cache access controller 57 registers the sector ID "00" (Step S220) and ends the process. In contrast, if the sector ID acquired from the response is not "00" (No at Step S219), the L1 cache access controller 57 determines whether the sector ID acquired from the response is "01" (Step S221).

If the sector ID acquired from the response is "01" (Yes at Step S221), the L1 cache access controller 57 registers the sector ID "01" (Step S222) and ends the process. In contrast, if the sector ID acquired from the response is not "01" (No at Step S221), the L1 cache access controller 57 registers the sector ID "11" (Step S223) and ends the process. Specifically, the L1 cache access controller 57 registers the sector ID received from the L2 cache access controller 45 without processing anything.

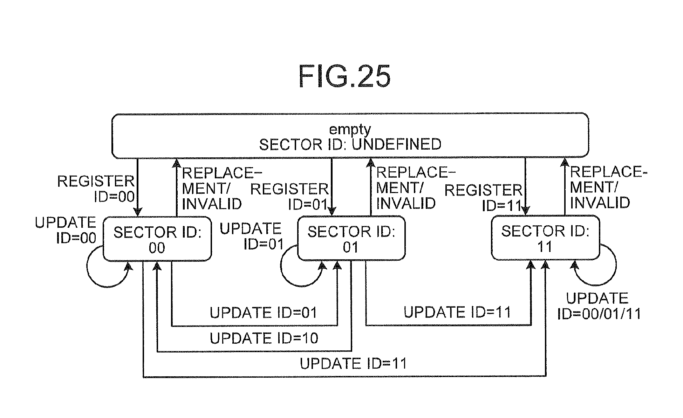

By performing the process illustrated in FIG. 23, the L1 cache access controller 57 creates a sector ID indicating whether data is updated within the time period executed by an application and, by performing the process illustrated in FIG. 24, the L1 cache access controller 57 registers the sector ID. Consequently, as illustrated in FIG. 25, the L1 cache access controller 57 shifts the sector ID registered in the L1 cache tag 42.

FIG. 25 is a schematic diagram illustrating the shift of the sector ID registered in an L1 cache tag. In the example illustrated in FIG. 25, any one of the sector IDs "00", "01", and "11" is registered in an undefined (empty) sector ID, and thereby the sector ID can shift to "00", "01", or "11". Furthermore, if a cache replacement is performed or if a state is changed to invalid, each value of the sector ID becomes undefined.

Furthermore, the sector ID "00" or the sector ID "01" shifts to one of the sector IDs "00", "01", and "11" depending on the sector ID value to be updated. However, if the sector ID value becomes "11", the sector ID value does not shift except when it is the case of a replacement or the state is invalid. Accordingly, the CPU 12g can definitely flush data whose sector ID becomes "11" once.

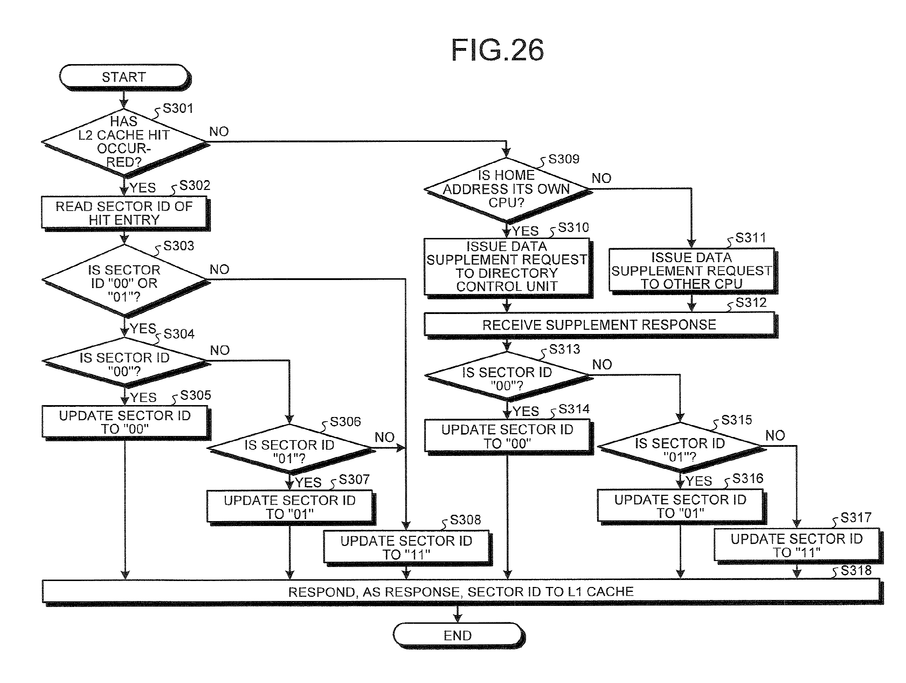

In the following, the flow of a process for registering a sector ID of the L2 cache will be described with reference to FIG. 26. FIG. 26 is a flowchart illustrating the flow of a process for registering a sector ID of the L2 cache.

For example, the L2 cache access controller 45 searches the L2 cache by using the L2 cache tag 46 and determines whether an L2 cache hit has occurred (Step S301). If the L2 cache access controller 45 determines that the L2 cache hit has occurred (Yes at Step S301), the L2 cache access controller 45 reads the sector ID of the hit entry (Step S302).

Then, the L2 cache access controller 45 determines whether the read sector ID is "00" or "01" (Step S303). If the sector ID is "00" or if the sector ID is "01" (Step S304), the L2 cache access controller 45 determines whether the sector ID is "00" (Step S304).

If the sector ID is "00" (Yes at Step S304), the L2 cache access controller 45 updates the read sector ID to "00" (Step S305). In contrast, if the sector ID is not "00" (No at Step S304), the L2 cache access controller 45 determines whether the sector ID is "01" (Step S306). If the sector ID is "01" (Yes at Step S306), the L2 cache access controller 45 updates the read sector ID to "01" (Step S307).

In contrast, if the sector ID is not "01" (No at Step S306), the L2 cache access controller 45 updates the read sector ID to "11" (Step S308). Furthermore, if the read sector ID is not "00" nor "01" (No at Step S303), the L2 cache access controller 45 updates the read sector ID to "11" (Step S308).

Furthermore, if an L2 cache hit has not occurred (No at Step S301), the L2 cache access controller 45 determines whether the home address of the data to be searched for is the address of the CPU 12g (Step S309). If the home address of the data to be searched for is the address of the CPU 12g (Yes at Step S309), the L2 cache access controller 45 issues a data supplement request to the directory control unit 54 (Step S310).

In contrast, if the home address of the data to be searched for is not the address of the CPU 12g (No at Step S309), the L2 cache access controller 45 issues a data supplement request to the other CPU (Step S311). Then, when the L2 cache access controller 45 receives a data supplement response (Step S312), the L2 cache access controller 45 determines whether the sector ID that is received together with the data is "00" (Step S313).

If the received sector ID is "00" (Yes at Step S313), the L2 cache access controller 45 updates the received sector ID to "00" (Step S314) and ends the process. In contrast, if the received sector ID is not "00" (No at Step S313), the L2 cache access controller 45 determines whether the received sector ID is "01" (Step S315).

If the received sector ID is "01" (Yes at Step S315), the L2 cache access controller 45 updates the received sector ID to "01" (Step S316). In contrast, if the received sector ID is not "01" (No at Step S315), the L2 cache access controller 45 updates the received sector ID to "11" (Step S317).

Thereafter, if the L2 cache access controller 45 updates the sector ID (Steps S305, S307, S308, S314, S316, and S317), the L2 cache access controller 45 performs the following process. Namely, the L2 cache access controller 45 responds, as a response, an updated sector ID to the L1 cache access controller 57 (Step S318) and ends the process.

The CPU 12g has the same function as that performed by the CPU 12 according to the first embodiment. Accordingly, the CPU 12g may also use a part of the memories 17 and 18 connected to the CPU 12g as a shared memory area and use only the shared memory area as the target for a flush. Accordingly, as a variation of the process performed by the L2 cache access controller 45 illustrated in FIG. 26, a description will be given of a process performed by the L2 cache access controller 45 when a flush is performed only on the shared memory area.

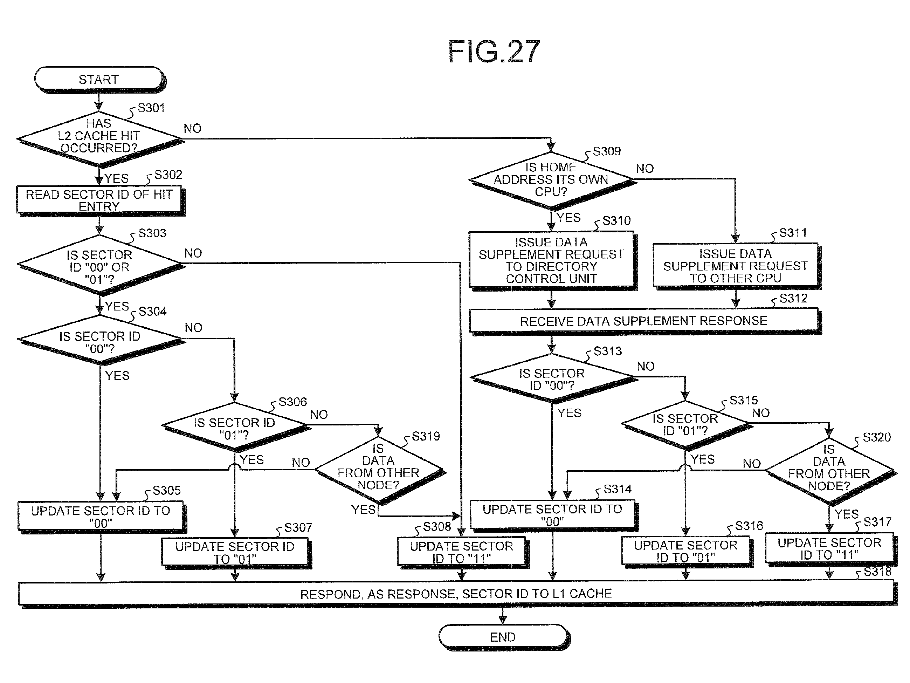

FIG. 27 is a flowchart illustrating the flow of a process for flushing only on a shared memory area. From among processes illustrated in FIG. 27, the processes performed at Steps S301 to S318 are the same as those performed at Steps S301 to S318 illustrated in FIG. 26; therefore, descriptions thereof will be omitted.

For example, if the sector ID of the entry in which a cache hit has occurred is not "01" (No at Step S306), the L2 cache access controller 45 performs the following process. Namely, the L2 cache access controller 45 determines whether the data of the entry in which a cache hit has occurred is data cached from a node other than the node in which the CPU 12g is present (Step S319).

If the cache hit data is not data of the other nodes (No at Step S319), the L2 cache access controller 45 updates the sector ID to "00" (Step S305). In contrast, if the cache hit data is data of the other nodes (Yes at Step 5319), the L2 cache access controller 45 updates the sector ID to "11" (Step S308).

Furthermore, if the sector ID of the supplement data is not "01" (No at Step S315), the L2 cache access controller 45 determines whether the data is cached from the other nodes (Step S320). If the L2 cache access controller 45 determines that the data is not cached from the other nodes (No at Step S320), the L2 cache access controller 45 updates the sector ID to "00" (Step S314). In contrast, if the L2 cache access controller 45 determines that the data is cached from the other nodes (Yes at Step S320), the L2 cache access controller 45 updates the sector ID to "11" (Step S317).

As described above, the L2 cache access controller 45 performs a flush only on the data cached from the other nodes and does not perform a flush on the data cached from the node (hereinafter, referred to as its own node) in which the CPU 12g is present. Specifically, in the information processing system 1d, even if the CPU 12g performs a flush on data cached from its own node, a recovery using data subjected to the flush is not performed when its own node fails. Accordingly, by performing a flush only on the data cached from the other node, the CPU 12g can more efficiently execute the flush process.

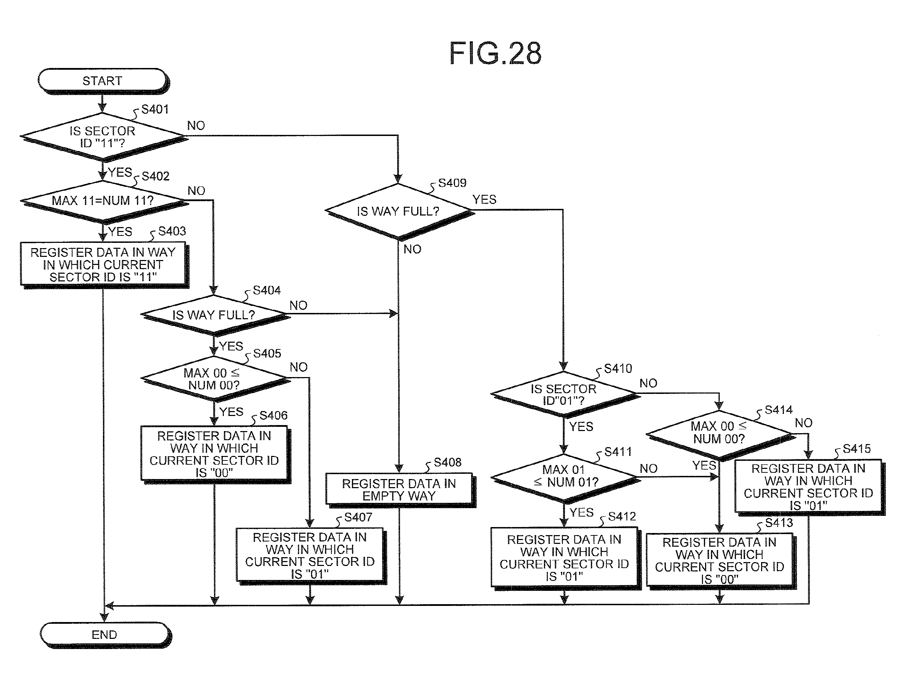

In the following, the flow of a process for registering a sector ID when a way to be flushed has an upper limit will be described with reference to FIG. 28. FIG. 28 is a flowchart illustrating the flow of a process for registering a sector ID when a way to be flushed has an upper limit.

In the example illustrated in FIG. 28, MAX 00 represents the amount of data with the sector ID of "00" that can be registered, MAX 01 represents the amount of data with the sector ID of "01" that can be registered, and MAX 11 represents the amount of data with the sector ID of "11" that can be registered. Furthermore, in the example illustrated in FIG. 28, NUM 00 represents the amount of data with the sector ID of "00" that is currently registered, NUM 01 represents the amount of data with the sector ID of "01" that is currently registered, and NUM 11 represents the amount of data with the sector ID of "11" that is currently registered. The MAX 01 and the MAX 11 are values stored in the sector maximum value register 58.

For example, the L2 cache access controller 45 determines whether the sector ID of the data to be stored is "11" (Step S401). If the sector ID is "11" (Yes at Step S401), the L2 cache access controller 45 determines whether the value of the MAX 11 is the same as the value of NUM 11 (Step S402).

If the value of the MAX 11 is the same as that of the NUM 11 (Yes at Step S402), the L2 cache access controller 45 registers data in any one of the ways in which the sector ID is "11" (Step S403) and ends the process. In contrast, if the value of the MAX 11 is not the same as that of the NUM 11 (No at Step S402), the L2 cache access controller 45 determines whether the way is full (Step S404).

If all of the ways are full (Yes at Step S404), the L2 cache access controller 45 determines whether the MAX 00 is equal to or less than NUM 00 (Step S405). If the MAX 00 is equal to less than the NUM 00 (Yes at Step S405), the L2 cache access controller 45 registers data in any one of the ways in which the current sector ID is "00" (Step S406) and ends the process.

In contrast, if the MAX 00 is greater than the NUM 00 (No at Step S405), the L2 cache access controller 45 registers data in any one of the ways in which the current sector ID is "01" (Step S407) and ends the process. Furthermore, if not all of the ways are full (No at Step S404), the L2 cache access controller 45 registers data in an empty way (Step S408) and ends the process.

Furthermore, if the sector ID is not "11" (No at Step S401), the L2 cache access controller 45 determines whether all of the ways are full (Step S409). If not all of the ways are full (No at Step S409), the L2 cache access controller 45 registers data in an empty way (Step S408) and ends the process.

Furthermore, if all of the ways are full (Yes at Step S409), the L2 cache access controller 45 determines whether the sector ID is "01" (Step S410). If the sector ID is "01" (Yes at Step S410), the L2 cache access controller 45 determines whether the MAX 01 is equal to or less than the NUM 01 (Step S411).

If the MAX 01 is equal to or less than the NUM 01 (Yes at Step S411), the L2 cache access controller 45 registers data in any one of the ways in which the current sector ID is "01" (Step S412) and ends the process. In contrast, if the MAX 01 is greater than the NUM 01 (No at Step S411), the L2 cache access controller 45 registers data in any one of the ways in which the current sector ID is "00" (Step S413) and ends the process.

Furthermore, if the sector ID is not "01" (No at Step S410), the L2 cache access controller 45 determines whether the MAX 00 is equal to or less than the NUM 00 (Step S414). If the MAX 00 is equal to or less than the NUM 00 (Yes at Step S414), the L2 cache access controller 45 registers data in any one of the ways in which the current sector ID is "00" (Step S413) and ends the process. In contrast, if the MAX 00 is greater than the NUM 00 (No at Step S414), the L2 cache access controller 45 registers data in any one of the ways in which the current sector ID is "01" (Step S415) and ends the process.

As described above, for the data in which the sector ID is "11", the L2 cache access controller 45 sets the maximum number of ways that can be registered. If the number of ways exceeds the maximum number, the L2 cache access controller 45 replaces data. Furthermore, if no empty way is present, the L2 cache access controller 45 replaces data in which the sector ID exceeds the upper limit.

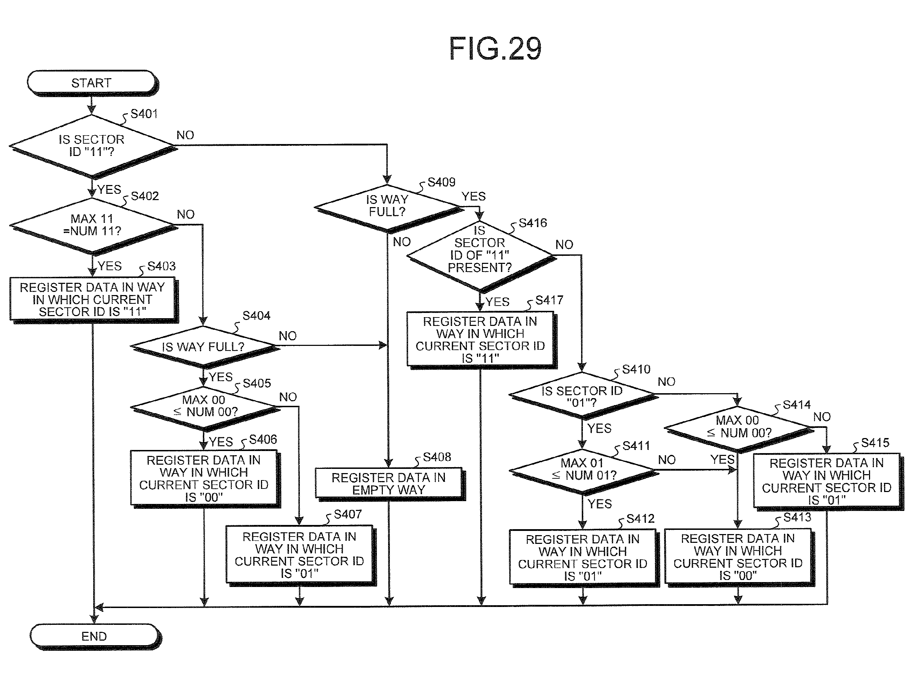

Furthermore, for the data to be flushed, the L2 cache access controller 45 may also write data back to a memory by actively replacing the data. Accordingly, in the following, the variation of the process performed by the L2 cache access controller 45 will be described with reference to FIG. 29.

FIG. 29 is a flowchart illustrating the variation of the process performed when a way to be flushed has an upper limit. It is assumed that the processes performed at Steps S401 to S415 illustrated in FIG. 29 are the same as those performed at Steps S401 to S415 illustrated in FIG. 28; therefore, descriptions thereof will be omitted.

For example, if the L2 cache access controller 45 determines that all of the ways are full (Yes at Step S409), the L2 cache access controller 45 determines whether the registration of the sector ID of "11" is present (Step S416). If the registration of the sector ID of "11" is present (Yes at Step S416), the L2 cache access controller 45 registers data in any one of the ways in which the sector ID is "11" (Step S417).

Specifically, the L2 cache access controller 45 replaces any one of the ways in which the sector ID is "11" and writes the data to the memories 17 and 18. In contrast, if the registration of the sector ID of "11" is not present (No at Step S416), the L2 cache access controller 45 determines whether the sector ID is "01" (Step S410).

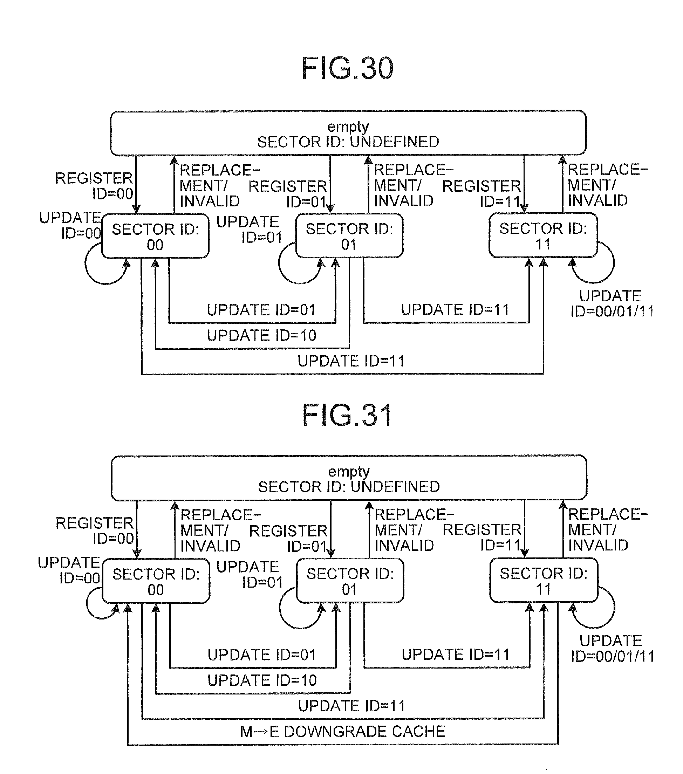

FIG. 30 is a schematic diagram illustrating the shift of a sector ID of an L2 cache (No. 1). FIG. 31 is a schematic diagram illustrating the shift of the sector ID of the L2 cache (No. 2). By performing the processes illustrated in FIGS. 28 and 29, i.e., by registering a sector ID, the L2 cache access controller 45 shifts the sector ID registered in the L2 cache tag 46, as illustrated in FIG. 30 or 31. FIG. 30 illustrates, as an example, the shift of the sector ID when the state of the tag of the target data is changed from "M" to "I" at the time of a write back. FIG. 31 illustrates, as an example, the shift of the sector ID when the state of the tag of the target data is changed from "M" to "E" at the time of a write back.

In the example illustrated in FIG. 30, the L2 cache access controller 45 does not shift the sector ID of "11" to another value until the L2 cache access controller 45 replaces data or makes the state invalid. In contrast, in the example illustrated in FIG. 31, the L2 cache access controller 45 may sometimes downgrade a cache, in which the state is changed from "M" to "E". Accordingly, if the L2 cache access controller 45 downgrades a cache, the L2 cache access controller 45 may sometimes shift the sector ID of "11" to a sector ID of "00".

Specifically, as illustrated in FIGS. 30 and 31, by shifting the value of the sector ID, the L2 cache access controller 45 retains the sector ID of "11" until the coherency between the memory and the cache is reliably retained. Accordingly, the CPU 12g suitably performs a cache flush.

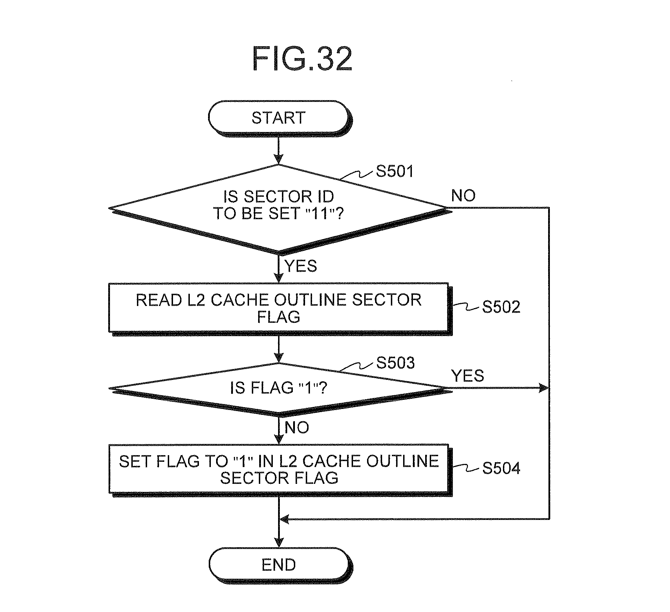

In the following, the flow of the process for setting the L2 cache outline sector flag 48 performed by the L2 cache access controller 45 will be described with reference to FIG. 32. FIG. 32 is a flowchart illustrating the flow of a process for setting an L2 cache outline sector flag. For example, the L2 cache access controller 45 determines whether the sector ID of the data to be stored is "11" (Step S501).

If the sector ID is "11" (Yes at Step S501), the L2 cache access controller 45 reads the L2 cache outline sector flag 48 (Step S502). Specifically, in the L2 cache outline sector flag 48 associated with the core that makes a request for data to be stored, the L2 cache access controller 45 reads a flag in a group in a cache line that stores therein data.

Then the L2 cache access controller 45 determines whether the read flag is "1" (Step S503). If the read flag is not "1" (No at Step S503), the L2 cache access controller 45 sets the flag to "1" in the L2 cache outline sector flag 48 (Step S504) and ends the process.

If the sector ID is not "11" (No at Step S501) or if the read flag is "1" (No at Step S503), the L2 cache access controller 45 ends the process without processing anything.

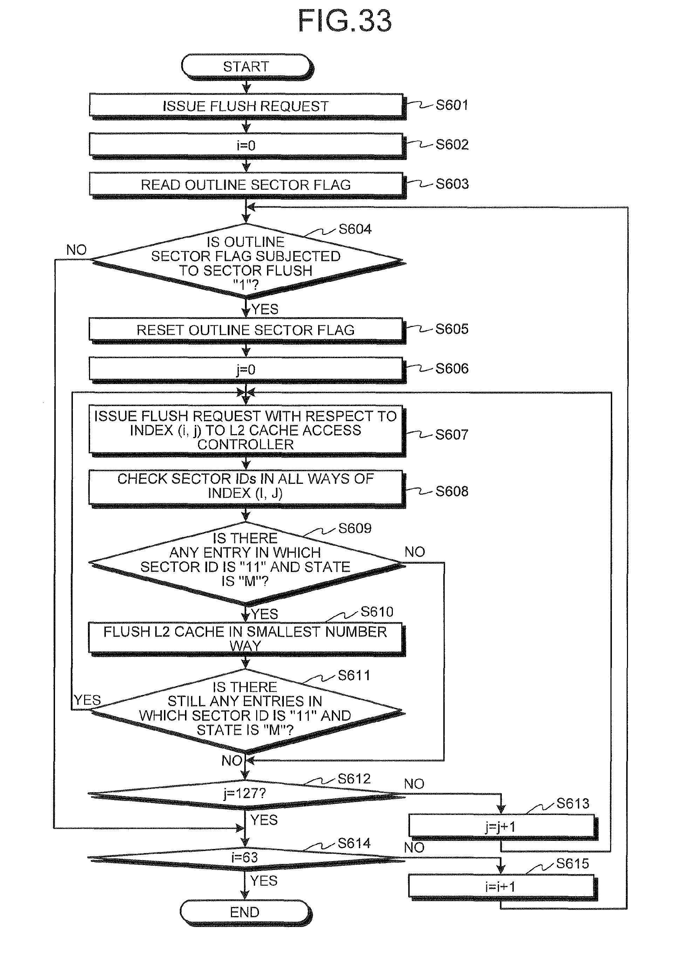

In the following, the flow of a process of a flush executed by the CPU 12g will be described with reference to FIG. 33. FIG. 33 is a flowchart illustrating the flow of a process for performing a flush. In the example illustrated in FIG. 33, for the L2 cache outline sector flag 48, the entry referred to by the CPU 12g is represented by "i". Furthermore, in the example illustrated in FIG. 33, an index of a cache line to be flushed is represented by "j". Furthermore, in the example illustrated in FIG. 33, it is assumed that the cache lines in the L2 cache 47 are divided into groups from "0" to "63", with 128 cache lines being contained in a group.

For example, in the example illustrated in FIG. 33, the flush control unit 52 performs a flush process triggered when an application executed by one of the cores 40 to 40b issues a flush request (Step S601). First, the flush control unit 52 sets "i=0" (Step S602).

Then, the flush control unit 52 reads an "i"^{th} entry from the L2 cache outline sector flag 48 associated with the core that issues the flush request (Step S603). Then, the flush control unit 52 determines whether the read outline sector flag is "1" (Step S604). If the read outline sector flag is "1" (Yes at Step S604), the flush control unit 52 resets the read outline sector flag to "0" (Step S605).

Then, the flush control unit 52 sets "j=0" (Step S606) and issues a flush request with respect to the index (i,j) of the L2 cache (Step S607). Specifically, the flush control unit 52 issues a flush request with respect to the "j"^{th} cache line belonging to the "i"^{th} group. Then, the L2 cache access controller 45 checks sector IDs in all of the ways of the index (i,j) (Step S608) and determines whether the entry in which the sector ID is "11" and the state is "M" is present (Step S609).

If the L2 cache access controller 45 detects the entry in which the sector ID is "11" and the state is "M" (Yes at Step S609), the L2 cache access controller 45 flushes, from the L2 cache 47, the data in the way having the smallest number in the detected entries (Step S610). Then, the L2 cache access controller 45 determines whether another entry in which the sector ID is "11" and the state is "M" is still present (Step S611).

If the L2 cache access controller 45 determines that there are no more entries in which the sector ID is "11" and the state is "M" (No at Step S611), the flush control unit 52 determines whether the value of "j" is "127" (Step S612). If the value of "j" is not "127" (No at Step S612), the flush control unit 52 increments the value of j by one (Step S613) and performs the process at Step S607.

In contrast, if the value of j is "127" (Yes at Step S612), the flush control unit 52 determines whether the value of i is "63" (Step S614). If the value of i is "63" (Yes at Step S614), the flush control unit 52 ends the process without processing anything. In contrast, if the value of "i" is not "63" (No at Step S614), the flush control unit 52 increments the value of "i" by one (Step S615) and ends the process at Step S604. Furthermore, if the read outline sector flag is not "1" (Step S604), the flush control unit 52 performs the process at Step S614.

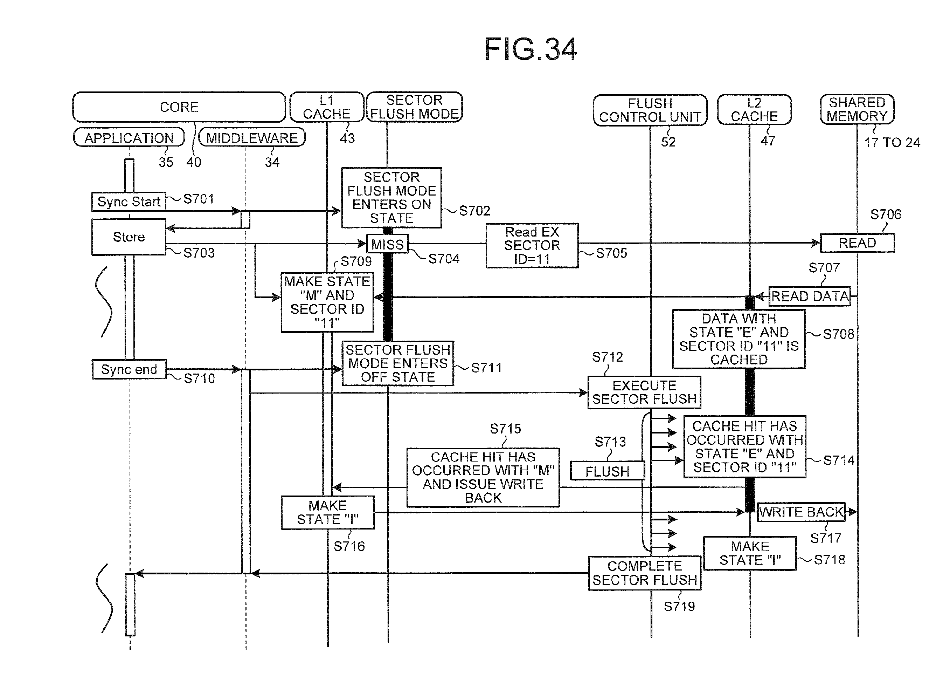

In the following, an operation of software and hardware executed by the CPU 12g will be described with reference to FIGS. 34 to 36. First, an operation of software and hardware performed when a cache miss occurs will be described with reference to FIG. 34. FIG. 34 is a sequence diagram illustrating an operation of software and hardware when a cache miss occurs at the time of the storing.

First, the application 35 issues a Sync Start (Step S701). Then, a sector flush mode, which corresponds to the time period indicated by an application, enters an ON state (Step S702). Thereafter, the application 35 issues a Store (Step S703). Then, because no data is stored in the L1 cache 43, a cache miss occurs (Step S704). Accordingly, the L1 cache access controller 57 issues a Read Ex that is a request for data to be supplemented (Step S705). At this point, the L1 cache access controller 57 specifies that the sector ID is "11".

Then, a read from the memories 17 to 24 is performed (Step S706), read data is output (Step S707), and the data is cached in the L2 cache 47 (Step S708). The read data is stored in the L1 cache 43 with the state being "M" and the sector ID being "11" (Step S709). Subsequently, the application 35 issues a Sync end (Step S710). Then, the sector flush mode enters an OFF state (Step S711).

Subsequently, a sector flush is performed by the flush control unit 52 (Step S712) and a flush request is issued to each of the cache lines (Step S713). At this point, because the state of the data cached at Step S708 is "E" and the sector ID is "11", a cache hit has occurred as the target of a flush (Step S714). Consequently, the L2 cache access controller 45 issues information indicating that a cache hit has occurred in the state "M" and issues a write back request (Step S715).

Then, the state of the data in the L1 cache 43 is changed to "I" (Step S716). Subsequently, the L2 cache access controller 57 performs a write back (Step S717) and changes the state of the L2 cache to "I" (Step S718). If the flush control unit 52 completes the sector flush (Step S719), the flush control unit 52 issues a completion response to the application 35.

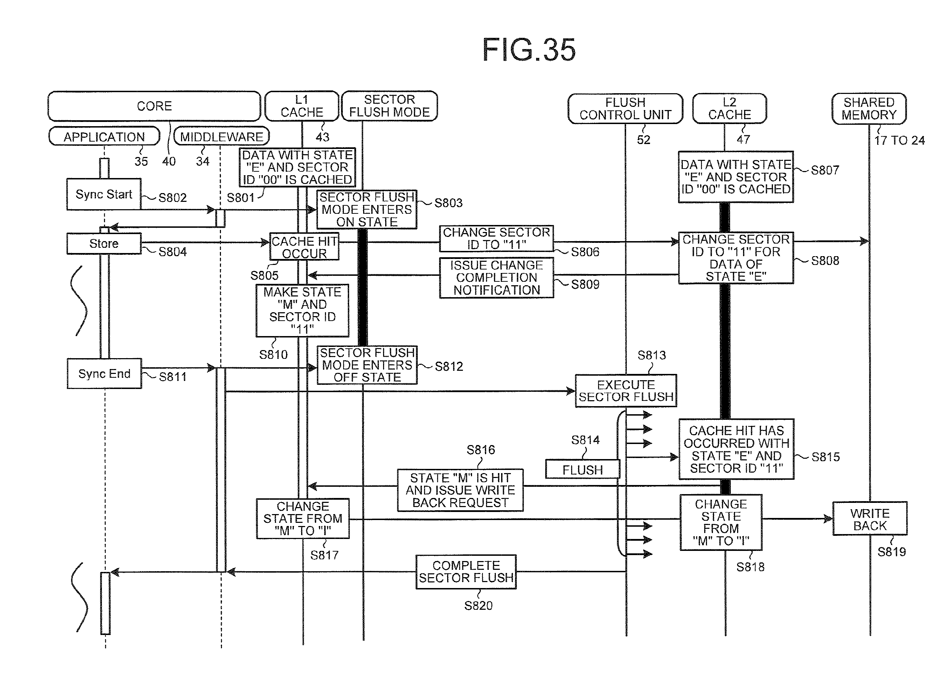

In the following, an operation between software and hardware performed when a cache hit occurs at the time of storing will be described with reference to FIG. 35. FIG. 35 is a sequence diagram illustrating an operation of software and hardware when a cache hit occurs at the time of the storing. In the example illustrated in FIG. 35, in the L1 cache 43, the data in which the state is "E" and the sector ID is "00" is cached (Step S801).

The application 35 executed by the core 40 issues a Sync Start (Step S802). Then, the sector flush mode enters an ON state (Step S803). Subsequently, the application 35 issues a Store (Step S804).

Then, because a cache hit occurs in the L1 cache 43 with respect to the target of Store (Step S805), the L1 cache access controller 57 notifies the L2 cache 47 indicating that the sector ID is to be changed to "11" (Step S806). At this point, in the L2 cache 47, similarly to the L1 cache 43, the data in which the state is "E" and the sector ID is "00" is cached (Step S807). Accordingly, for the data in which the state is "E", the L2 cache access controller 45 changes the sector ID to "11" (Step S808) and issues a change completion notification (Step S809).

Subsequently, the L1 cache access controller 57 sets the state of the data to "M" and sets the sector ID to "11", which are stored in the L1 cache 43 (Step S810). Thereafter, the application 35 issues a Sync end (Step S811). Then, the sector flush mode enters an OFF state (Step S812).

Thereafter, the flush control unit 52 performs a sector flush (Step S813) and performs a flush on each cache line in the L2 cache 47 (Step S814). Then, a cache hit occurs for the cache in which the state is "E" and the sector ID is "11" (Step S815). Consequently, the L2 cache access controller 45 issues a response indicating that the state "M" is hit and issues a write back request (Step S816).

Then, the L1 cache access controller 57 changes the state of the cache hit data from "M" to "I" (Step S817). Subsequently, the L2 cache access controller 45 also changes the state of the cache hit data from "M" to "I" (Step S818) and then writes the data back to the memories 17 to 24 (Step S819). Furthermore, after the sector flush is performed, the flush control unit 52 issues, to the application 35, a response indicating that the sector flush has been completed (Step S820).

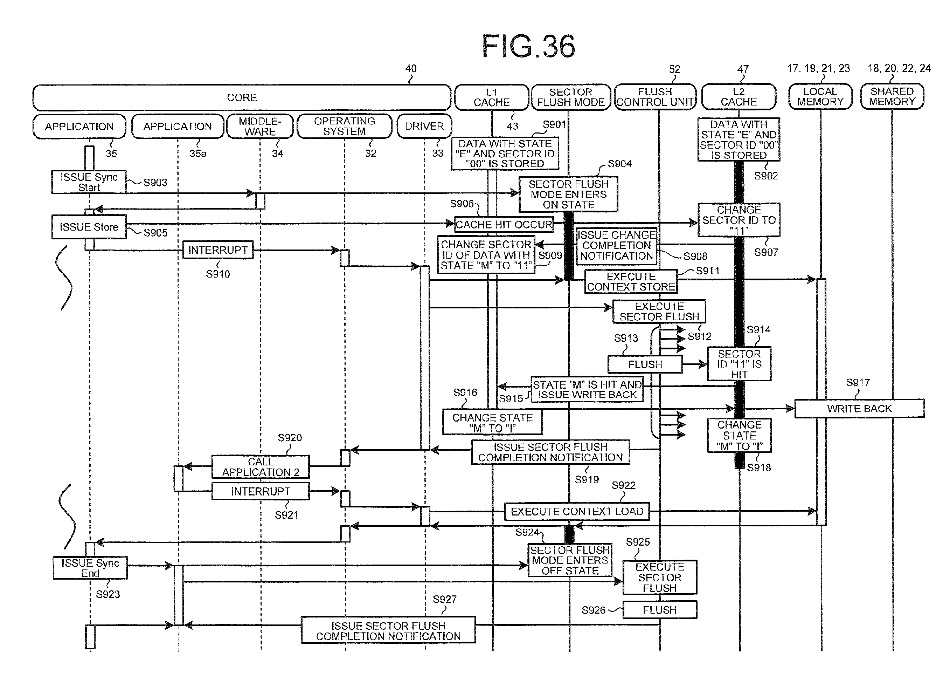

In the following, the flow of an operation of software and hardware when a context switch occurs will be described with reference to FIG. 36. FIG. 36 is a sequence diagram illustrating an operation of software and hardware when a context switch occurs. In the example illustrated in FIG. 36, the data in which the state is "E" and the sector ID is "00" is stored in both the L1 cache 43 and the L2 cache 47 (Steps S901 and S902).

The application 35 executed by the core 40 issues a Sync Start (Step S903). Then, the sector flush mode enters an ON state (Step S904). Subsequently, the application 35 issues a Store (Step S905).

Then, a cache hit with respect to a Store occurs in the L1 cache 43 (Step S906), the L1 cache access controller 57 notifies the L2 cache 47 indicating that the sector ID is to be changed to "11". Accordingly, for the data in which the state is "E", the L2 cache access controller 45 changes the sector ID to "11" (Step S907) and issues a change completion notification (Step S908). Furthermore, the L1 cache access controller 57 changes the sector ID of the data storing therein the state of "M" to "11" (Step S909).

At this point, an interrupt instruction is issued (Step S910). The driver 33 executes a context switch and executes a context store that stores the value of the register in the memories 17, 19, 21, and 23 (Step S911). Furthermore, if a context store occurs, the driver 33 requests a sector flush without waiting the sector flush mode to enter an OFF state; therefore, the flush control unit 52 performs a sector flush (Step S912). Furthermore, the flush control unit 52 performs a flush on a cache line that contains the data in which the sector ID is "11" (Step S913) and thus there is a hit for the data in which the sector ID is "11" (Step S914).

Consequently, the L2 cache access controller 45 issues a response indicating that there is a hit for the state "M" and issues a write back request (Step S915). Then, the L1 cache access controller 57 changes the state of the cache hit data from "M" to "I" (Step S916) and writes the data back to the memories 17 to 24 (Step S917). Furthermore, the L2 cache access controller 45 changes the state of the cache hit data from "M" to "I" (Step S918).

Furthermore, after performing the sector flush, the flush control unit 52 issues a response indicating the completion of the sector flush to the application 35 (Step S919). Then, the operating system 32 calls an application 2 (Step S920) and an interrupt occurs (Step S921). Then, the driver 33 executes a context load (Step S922).

Subsequently, if the application 35 issues a Sync end (Step S923), the sector flush mode enters an OFF state (Step S924). Then, the flush control unit 52 performs a sector flush (Step S925) and then issues a flush (Step S926). Thereafter, the flush control unit 52 issues a sector flush completion notification (Step S927).

### Advantage of the fifth embodiment

As described above, the CPU 12g adds the sector ID of "11" to the data that is updated within the time period specified by the application 35 and stores the data. Then, if the time period specified by the application 35 ends, the CPU 12g executes a flush in which only the data with the sector ID of "11" is written back from the L2 cache 43 to the memories 17 to 24.

Accordingly, the CPU 12 can reduce the amount of the program of the application 35 that needs to be modified. Furthermore, the CPU 12 can reduce the processing time for the write back of data and can prevent performance degradation of the information processing system 1.

Furthermore, the CPU 12g includes, for each of the cores 40 to 40b and for each set of multiple cache lines, an L2 cache outline sector flag that indicates whether data has been updated within the time period specified by the application 35. If a flush request is issued, the CPU 12g checks, for each core that issues the flush request, the cache lines in the group in which the L2 cache outline sector flag is "1".

Thereafter, from among the checked cache lines, the CPU 12g writes the data in which the checked sector ID is "11" back to the memories 17 to 24. Accordingly, the CPU 12g can write the data that has been updated within the time period specified by the application 35 back to the memories 17 to 24 without checking all of the cache lines stored in the cache memory 12a. Furthermore, when the CPU 12g includes cores, the CPU 12g can efficiently execute a flush.

Furthermore, if a context switch occurs, the CPU 12g executes a flush before the time period specified by an application ends and executes a flush again after the time period specified by an application ends. Accordingly, the CPU 12g has a context switch function and can efficiently execute a flush even if an application executed by each of the cores 40 to 40b is changed every time a context switch occurs.

### [f] Sixth Embodiment

In the above explanation, a description has been given of the embodiments according to the present invention; however, the embodiments are not limited thereto and the present invention can be implemented with various kinds of embodiments other than the embodiments described above. Accordingly, in the following, another embodiment included in the present invention will be described as a sixth embodiment.

### (1) Combination of the embodiments

In the fifth embodiment described above, a description has been given of the CPU 12g having the function described in the first to the third embodiments; however, the embodiments are not limited thereto. For example, the function described in each of the first to the third embodiments can be performed in any combination. Furthermore, even when a CPU includes a plurality of cores, it may also be possible to perform a process by using the sector flag described in the first embodiment or the outline sector flag described in the second embodiment. Furthermore, it may also be possible to add the function described in the fourth embodiment to the CPU 12g and, when a flush is performed, it is possible to use only a specific way as the target of a flush.

### (2) Application

In the first to the fifth embodiments described above, a description has been given of an example in which a flush is performed in accordance with a flush request issued by an application; however, the embodiments are not limited thereto. If a flush request is issued after the time period specified by a program of an application or the like ends, a flush request may also be issued by an arbitrary program, such as middleware.

### (3) Hierarchy of a cache

In the fifth embodiment described above, a description has been given of an example in which the L2 cache 47, which is shared by the L1 caches 43 to 43b in the cores 40 to 40b, respectively, and which is shared by each of the cores 40 to 40b, is included; however, the embodiment is not limited thereto. For example, the embodiment may also be used for a CPU that includes a Level 3 cache or the like.

According to one aspect of an embodiment of the present invention, an advantage is provided in that it is possible to reduce the amount of modification of a flush request issued by a program.

## Claims

1. A processor (12 to 12g) comprising:
a cache memory (12a) arranged to temporarily retain data stored in a main storage (17 to 24);
a processing unit (40 to 40b) arranged to execute an application by using the data retained in the cache memory (12a);
**characterized by** further comprising
a storing unit (12c, 12e, 42, 46) arranged to store therein update information indicating data that has been updated by the processing unit (40 to 40b) within a time period specified by the application executed by the processing unit (40 to 40b); and
a write back unit (52) that is arranged, when the time period specified by the application ends, to write back, to the main storage (17 to 24) from the cache memory (12a), data that is from among the data retained in the cache memory (12a) and that is indicated by the update information stored in the storing unit (12c, 12e, 42, 46).

2. The processor (12 to 12g) according to claim 1, wherein
the cache memory (12a) includes multiple cache lines, each of which is arranged to store therein the data,
the storing unit (12c, 12e, 42, 46) is arranged to store therein, for each cache line and as the update information, a sector flag that indicates whether data has been updated within the time period specified by the application, and
the write back unit (52) is arranged to write back, to the main storage (17 to 24), data stored in a cache line in which an
update is indicated by the sector flag and that is from among the multiple cache lines included in the cache memory (12a).

3. The processor (12 to 12g) according to claim 2, wherein
the storing unit (12c, 12e, 42, 46) is arranged to store therein, for each set of multiple cache lines, an outline sector flag (12c) that indicates whether data has been updated within the time period specified by the application, and
the write back unit (52) is arranged to write back, to the main storage (17 to 24), data stored in a cache line in which an update is indicated by the sector flag and that is from among the set of multiple cache lines in each of which the update is indicated by the outline sector flag (12c).

4. The processor (12 to 12g) according to claim 2, further comprising a plurality of the processing units (40 to 40b), wherein
the storing unit (12c, 12e, 42, 46) is arranged to store therein, for each set of multiple cache lines, an arithmetic flag (48) indicating whether data has been updated within the time period specified by the application executed by any one of the processing units (40 to 40b), and
when the time period specified by the application executed by one of the processing units (40 to 40b) ends, the write back unit (52) is arranged to write back, to the main storage (17 to 24), the data stored in a cache line in which the update is indicated by the sector flag and that is from among the multiple cache lines indicated by the arithmetic flag (48) indicating that data has been updated within the time period specified by the application executed by the one of the processing units (40 to 40b).

5. The processor (12 to 12g) according to any one of claims 2 to 4, wherein
the cache memory (12a) includes multiple cache lines each of which includes multiple ways, and
the write back unit (52) is arranged to write back, to the main storage (17 to 24), only data stored in a specific way of the cache line in which the update is indicated by the sector flag.

6. The processor (12 to 12g) according to any one of claims 1 to 5, wherein
the processing unit (40 to 40b) has a function of executing a context switch that changes the application to be executed, and
the write back unit (52) is arranged to write back, to the main storage (17 to 24), data stored in a cache line in which the update is indicated by the sector flag, when the time period specified by the application ends or when the processing unit (40 to 40b) executes the context switch.

7. An information processing apparatus comprising:
a main storage (17 to 24) arranged to store therein data; and
a plurality of processors (12 to 12g) that share the main storage (17 to 24), wherein
each of the processors (12 to 12g) comprises a processor (12 to 12g) according to claim 1.

8. An arithmetic method executed by a processor (12 to 12g) having a function of caching data stored in a main storage (17 to 24), **characterized by** the arithmetic method comprising:
storing update information indicating cached data that has been updated within a time period specified by an application; and
writing back, to a main storage (17 to 24) when the time period specified by the application ends, cached data being indicated by the update information.

## Patentansprüche

1. Prozessor (12 bis 12g), aufweisend:
einen Cache-Speicher (12a), der zum vorübergehenden Halten von in einem Hauptspeicher (17 bis 24) gespeicherten Daten angeordnet ist;
eine Verarbeitungsvorrichtung (40 bis 40b), die zum Ausführen einer Anwendung durch Anwenden der im Cache-Speicher (12a) gehaltenen Daten angeordnet ist;
**gekennzeichnet durch** ferner aufweisend
eine Speichereinheit (12c, 12e, 42, 46), die zum Speichern von Aktualisierungsinformation angeordnet ist, die indikativ für Daten ist, die von der Verarbeitungsvorrichtung (40 bis 40b) innerhalb einer von der von der Verarbeitungsvorrichtung (40 bis 40b) spezifizierten Zeitperiode aktualisiert worden sind; und
eine Rückschreibeinheit (52), die angeordnet ist, um, wenn die von der Anwendung spezifizierte Zeitperiode endet, aus dem Cache-Speicher (12a) zum Hauptspeicher (17 bis 24) Daten zurückzuschreiben, die unter den im Cache-Speicher (12a) gehaltenen Daten sind, und die von der in der Speichereinheit (12c, 12e, 42, 46) gespeicherte Aktualisierungsinformation angegeben sind.

2. Prozessor (12 bis 12g) nach Anspruch 1, wobei
der Cache-Speicher (12a) mehrere Cache-Zeilen aufweist, von denen jede zum Speichern von Daten darin angeordnet ist,
die Speichereinheit (12c, 12e, 42, 46) angeordnet ist, um darin für jede Cache-Zeile und als Aktualisierungsinformation ein Sector-Flag, das angibt, ob Daten innerhalb der von der Anwendung spezifizierten Zeitperiode aktualisiert worden sind, zu speichern, und
die Rückschreibeinheit (52) angeordnet ist, um an den Hauptspeicher (17 bis 24) in einer Cache-Zeile, in der eine Aktualisierung durch das Sector-Flag angegeben ist und die von mehreren im Cache-Speicher (12a) enthaltenen Cache-Zeilen ist, gespeicherte Daten zurückzuschreiben.

3. Prozessor (12 bis 12g) nach Anspruch 2, wobei
die Speichereinheit (12c, 12e, 42, 46) angeordnet ist, um darin für jeden Satz von mehreren Cache-Zeilen ein Outline-Sector-Flag (12c), angebend, ob Daten innerhalb der von der Anwendung spezifizierten Zeitperiode aktualisiert worden sind, zu speichern, und
die Rückschreibeinheit (52) angeordnet ist, um an den Hauptspeicher (17 bis 24) in einer Cache-Zeile, in der eine Aktualisierung durch das Sector-Flag angegeben ist und die von dem Satz von mehreren im Cache-Speicher enthaltenen Cache-Zeilen ist, in der jeweils die Aktualisierung durch das Outline-Sector-Flag (12c) angegeben ist, gespeicherte Daten zurückzuschreiben.

4. Prozessor (12 bis 12g) nach Anspruch 2, ferner aufweisend mehrere Verarbeitungseinheiten (40 bis 40b), wobei
die Speichereinheit (12c, 12e, 42, 46) angeordnet ist, um darin für jeden Satz von mehreren Cache-Zeilen ein arithmetisches Flag (48), das angibt, ob Daten innerhalb der von einer der Verarbeitungsvorrichtungen (40 bis 40b) ausgeführten Anwendung spezifizierten Zeitperiode aktualisiert worden sind, zu speichern, und
wenn die spezifizierte Zeitperiode von einer der Verarbeitungsvorrichtungen (40 bis 40b) ausgeführten Anwendung endet, die Rückschreibeinheit (52) angeordnet ist, um an den Hauptspeicher (17 bis 24) die in einer Cache-Zeile, in der die Aktualisierung durch das Sector-Flag angegeben ist und dies von unter den mehreren Cache-Zeilen durch das arithmetische Flag (48) angegeben ist, angebend, dass Daten innerhalb der von der von der einen Verarbeitungsvorrichtungen (40 bis 40b) ausgeführten Anwendung spezifizierten Zeitperiode aktualisiert worden sind.

5. Prozessor (12 bis 12g) nach einem der vorhergehenden Ansprüche 2 bis 4, wobei
der Cache-Speicher (12) mehrere, jeweils mehrere Wege aufweisende Cache-Zeilen aufweist, und
die Rückschreibeinheit (52) angeordnet ist, um an den Hauptspeicher (17 bis 24) nur in einem spezifischen Weg der Cache-Zeile, in der die Aktualisierung durch das Sector-Flag angegeben ist, zurückzuspeichern.

6. Prozessor (12 bis 12g) nach einem der Ansprüche 1 bis 5, wobei
die Verarbeitungsvorrichtung (40 bis 40b) eine Funktion zum Ausführen einer Kontextumstellung, die die auszuführende Anwendung ändert, und
die Rückschreibeinheit (52) angeordnet ist, um an den Hauptspeicher (17 bis 24) in einer Cache-Zeile, in der eine Aktualisierung durch das Sector-Flag angegeben ist, gespeicherte Daten, zurückzuschreiben, wenn die von der Anwendung spezifizierte Zeitperiode endet oder wenn die Verarbeitungsvorrichtung (40 bis 40b) die Kontextumstellung ausführt.

7. Informationsverarbeitungsvorrichtung, aufweisend:
einen Hauptspeicher (17 bis 24) zum Speichern von Daten darin; und mehrere Prozessoren (12 bis 12g), die den Hauptspeicher (17 bis 24) gemeinsam benutzen, wobei
jeder der Prozessoren (12 bis 12g) einen Prozessor (12 bis 12g) nach Anspruch 1 aufweist.

8. Arithmetikverfahren, ausgeführt von einem Prozessor (12 bis 12g), aufweisend eine Funktion zum Cachen von in einem Hauptspeicher (17 bis 24) gespeicherten Daten, **gekennzeichnet durch** das Arithmetikverfahren, das Folgendes aufweist:
Speichern von Aktualisierungsinformation, die angibt, dass gecachte Daten innerhalb einer von einer Anwendung spezifizierten Zeitperiode aktualisiert worden sind; und
Zurückschreiben in einen Hauptspeicher (17 bis 24), wenn die von der Anwendung spezifizierte Zeitperiode endet, von gecachten Daten, die **durch** die Aktualisierungsinformation angegeben sind.

## Revendications

1. Processeur (12 à 12g) comprenant :
une mémoire cache (12a) agencée pour retenir de manière temporaire les données mémorisées dans une mémoire principale (17 à 24) ;
une unité de traitement (40 à 40b) agencée pour exécuter une application en utilisant les données retenues dans la mémoire cache (12a) ;
**caractérisé en ce qu'**il comprend en outre :
une unité de mémorisation (12c, 12e, 42, 46) agencée pour mémoriser dans celle-ci des informations de mise à jour indiquant les données qui ont été mises à jour par l'unité de traitement (40 à 40b) dans une période de temps spécifiée par l'application exécutée par l'unité de traitement (40 à 40b) ; et
une unité de réécriture (52) qui est agencée, lorsque la période de temps spécifiée par l'application se termine, réécrire, de la mémoire cache (12a) dans la mémoire principale (17 à 24), des données qui se trouvent parmi les données retenues dans la mémoire cache (12a) et qui sont indiquées par les informations de mise à jour mémorisées dans l'unité de mémorisation (12c, 12e, 42, 46).

2. Processeur (12 à 12g) selon la revendication 1, dans lequel
la mémoire cache (12a) comprend de multiples lignes de mémoire cache, chacune d'elles étant agencée pour mémoriser dans celle-ci les données,
l'unité de mémorisation (12c, 12e, 42, 46) est agencée pour mémoriser dans celle-ci, pour chaque ligne de mémoire cache et en tant qu'informations de mise à jour, un indicateur de secteur qui indique si les données ont été mises à jour dans la période de temps spécifiée par l'application, et
l'unité de réécriture (52) est agencée pour réécrire, dans la mémoire principale (17 à 24), les données mémorisées dans une ligne de mémoire cache dans laquelle une mise à jour est indiquée par l'indicateur de secteur et qui fait partie des multiples lignes de mémoire cache incluses dans la mémoire cache (12a).

3. Processeur (12 à 12g) selon la revendication 2, dans lequel
l'unité de mémorisation (12c, 12e, 42, 46) est agencée pour mémoriser dans celle-ci, pour chaque ensemble de multiples lignes de mémoire cache, un indicateur de secteur d'ensemble (12c) qui indique si les données ont été mises à jour dans la période de temps spécifiée par l'application, et
l'unité de réécriture (52) est agencée pour réécrire, dans la mémoire principale (17 à 24), les données mémorisées dans une ligne de mémoire cache dans laquelle une mise à jour est indiquée par l'indicateur de secteur et qui fait partie de l'ensemble de multiples lignes de mémoire cache dans chacune desquelles la mise à jour est indiquée par l'indicateur de secteur d'ensemble (12c).

4. Processeur (12 à 12g) selon la revendication 2, comprenant en outre une pluralité des unités de traitement (40 à 40b), dans lequel
l'unité de mémorisation (12c, 12e, 42, 46) est agencée pour mémoriser dans celle-ci, pour chaque ensemble de multiples lignes de mémoire cache, un indicateur arithmétique (48) indiquant si les données ont été mises à jour dans la période de temps spécifiée par l'application exécutée par l'une quelconque des unités de traitement (40 à 40b), et
lorsque la période de temps spécifiée par l'application exécutée par l'une des unités de traitement (40 à 40b) se termine, l'unité de réécriture (52) est agencée pour réécrire, dans la mémoire principale (17 à 24), les données mémorisées dans une ligne de mémoire cache dans laquelle la mise à jour est indiquée par l'indicateur de secteur et qui fait partie des multiples lignes de mémoire cache indiquées par l'indicateur arithmétique (48) indiquant que les données ont été mises à jour dans la période de temps spécifiée par l'application exécutée par l'une des unités de traitement (40 à 40b).

5. Processeur (12 à 12g) selon l'une quelconque des revendications 2 à 4, dans lequel
la mémoire cache (12a) comprend de multiples lignes de mémoire cache qui comprennent chacune de multiples voies, et
l'unité de réécriture (52) est agencée pour réécrire, dans la mémoire principale (17 à 24), uniquement les données mémorisées dans une voie spécifique de la ligne de mémoire cache dans laquelle la mise à jour est indiquée par l'indicateur de secteur.

6. Processeur (12 à 12g) selon l'une quelconque des revendications 1 à 5, dans lequel
l'unité de traitement (40 à 40b) a pour fonction d'exécuter une commutation de contexte qui change l'application à exécuter, et
l'unité de réécriture (52) est agencée pour réécrire, dans la mémoire principale (17 à 24), les données mémorisées dans une ligne de mémoire cache dans laquelle la mise à jour est indiquée par l'indicateur de secteur, lorsque la période de temps spécifiée par l'application se termine ou lorsque l'unité de traitement (40 à 40b) exécute la commutation de contexte.

7. Appareil de traitement d'informations comprenant :
une mémoire principale (17 à 24) agencée pour mémoriser dans celle-ci des données ; et
une pluralité de processeurs (12 à 12g) qui partagent la mémoire principale (17 à 24), dans lequel
chacun des processeurs (12 à 12g) comprend un processeur (12 à 12g) selon la revendication 1.

8. Procédé arithmétique exécuté par un processeur (12 à 12g) ayant pour fonction de mettre en mémoire cache les données mémorisées dans une mémoire principale (17 à 24), **caractérisé en ce que** le procédé arithmétique comprend :
la mémorisation d'informations de mise à jour indiquant les données mises en mémoire cache qui ont été mises à jour dans une période de temps spécifiée par une application ; et
la réécriture, dans une mémoire principale (17 à 24), lorsque la période de temps spécifiée par l'application se termine, des données mises en mémoire cache indiquées par les informations de mise à jour.
